# EUROPÄISCHE PATENTSCHRIFT

(11) **EP 2 718 997 B1**
(45) Veröffentlichungstag und Bekanntmachung des Hinweises auf die Patenterteilung: **05.08.2020**
(21) Anmeldenummer: 12727107.0
(22) Anmeldetag: 06.06.2012
(51) Int. Cl.: H01M 2/06, C03C 29/00, C03C 3/19, C03C 4/20, C03C 8/24, H01B 17/30, H01M 2/02, H01M 2/08, H01M 2/30, H01M 10/0525

(54) **DURCHFÜHRUNG**
FEEDTHROUGH
PASSAGE

(30) Priorität: 10.06.2011 DE 102011103975; 10.06.2011 DE 102011103976; 07.07.2011 DE 102011106873; 17.02.2012 WO PCT/EP2012/000698; 17.02.2012 WO PCT/EP2012/000699; 17.02.2012 WO PCT/EP2012/000700; 17.02.2012 WO PCT/EP2012/000701; 17.02.2012 WO PCT/EP2012/000702; 17.02.2012 WO PCT/EP2012/000703
(43) Veröffentlichungstag der Anmeldung: 16.04.2014
(73) Patentinhaber: Schott AG, 55122 Mainz (DE)
(72) Erfinder: HARTL, Helmut, 1210 Wien (AT)
(74) Vertreter: Sawodny, Michael-Wolfgang
(86) Internationale Anmeldenummer: PCT/EP2012/002404
(87) Internationale Veröffentlichungsnummer: WO 2012/167921

(56) Entgegenhaltungen:
- DE-C- 944 203
- GB-A- 699 492
- US-A- 3 006 984
- US-A- 5 262 364
- US-A- 5 373 519
- US-A1- 2003 134 194
- US-A1- 2006 049 421
- DATABASE WPI Week 198431 7. Dezember 1983 (1983-12-07) Thomson Scientific, London, GB; AN 1984-194386 XP002677543, -& SU 1 058 909 A1 (KOSTANYAN K A) 7. Dezember 1983 (1983-12-07)

## Beschreibung

Die Erfindung betrifft eine Durchführung, insbesondere durch ein Gehäuseteil eines Gehäuses, insbesondere eines Batteriezellengehäuses, wobei das Gehäuseteil wenigstens eine Öffnung aufweist, durch die wenigstens ein Leiter in einem Glas- oder Glaskeramikmaterial hindurchgeführt wird.

Als Batterien im Sinne der Erfindung wird sowohl eine Einwegbatterie, die nach ihrer Entladung entsorgt und/oder recycelt wird, als auch ein Akkumulator verstanden.

Akkumulatoren, bevorzugt Lithium-Ionen-Batterien, sind für verschiedene Anwendungen vorgesehen, wie beispielsweise tragbare elektronische Geräte, Mobiltelefone, Motorwerkzeuge sowie insbesondere Elektrofahrzeuge. Die Batterien können traditionelle Energiequellen wie beispielsweise Blei-Säure-Batterien, Nickel-Cadmium-Batterien oder Nickel-Metallhydridbatterien ersetzen.

Lithium-Ionen-Batterien sind seit vielen Jahren bekannt. Diesbezüglich wird beispielsweise auf "Handbook of Batteries, David Linden, Herausgeber, 2. Auflage, McGrawhill, 1995, Kapitel 36 und 39" verwiesen.

Verschiedene Aspekte von Lithium-Ionen-Batterien sind in einer Vielzahl von Patenten beschrieben. Beispielsweise seien genannt US 961,672 A, US 5,952,126 A, US 5,900,183 A, US 5,874,185 A, US 5,849,434 A, US 5,853,914 A sowie US 5,773,959 A.

Lithium-Ionen-Batterien, insbesondere für Anwendungen in einer Automobil-Umgebung weisen in der Regel eine Vielzahl von einzelnen Batteriezellen auf, die miteinander in Serie geschaltet werden. Die miteinander in Reihe bzw. in Serie geschalteten Batteriezellen werden zu sogenannten Batteriepacks zusammengefasst, mehrere Batteriepacks dann zu einem Batteriemodul, das auch als Lithium-Ionen-Batterie bezeichnet wird. Jede einzelne Batteriezelle besitzt Elektroden, die aus einem Gehäuse der Batteriezelle herausgeführt werden.

Insbesondere für die Anwendung von Lithium-Ionen-Batterien in der Automobil-Umgebung müssen eine Vielzahl von Problemen wie Korrosionsbeständigkeit, Beständigkeit bei Unfall oder Schwingungsfestigkeit gelöst werden. Ein weiteres Problem ist die hermetische Dichtheit der Batteriezellen über einen langen Zeitraum. Die Dichtheit beeinträchtigen können z. B. Undichtigkeit im Bereich der Elektroden der Batteriezelle beziehungsweise der Elektrodendurchführung der Batteriezelle. Derartige Undichtigkeiten können beispielsweise hervorgerufen werden durch Temperaturwechselbelastungen und mechanische Wechselbelastungen, wie beispielsweise Vibrationen im Fahrzeug oder die Alterung des Kunststoffes. Ein Kurzschluss oder Temperaturänderungen der Batterie beziehungsweise Batteriezelle kann zu einer verminderten Lebensdauer der Batterie beziehungsweise Batteriezelle führen.

Um eine bessere Beständigkeit bei Unfall sicherzustellen, schlägt die DE 101 05 877 A1 beispielsweise ein Gehäuse für eine Lithium-Ionen-Batterie vor, wobei das Gehäuse einen Metallmantel umfasst, der auf beiden Seiten offen ist und verschlossen wird. Der Stromanschluss beziehungsweise die Elektroden sind durch einen Kunststoff isoliert. Nachteilig an den Kunststoffisolierungen sind die limitierte Temperaturbeständigkeit, die begrenzte mechanische Beständigkeit, die Alterung und die unsichere Dichtheit über der Lebensdauer. Die Stromdurchführungen sind bei den Lithium-Ionen-Batterien gemäß dem Stand der Technik somit nicht hermetisch dicht in beispielsweise das Deckelteil der Li-Ionen-Batterie eingebaut. Des Weiteren sind die Elektroden verquetschte und lasergeschweißte Verbindungsbauteile mit zusätzlichen Isolatoren im Innenraum der Batterie.

Ein weiteres Problem bei den Lithium-Ionen-Batterien im Stand der Technik war, dass die Batteriezellen einen großen Bauraum aufwiesen und aufgrund der hohen Ströme durch Widerstandsverluste sehr rasch Erwärmung und damit Temperaturänderungen auftraten.

Aus der DE 27 33 948 A1 ist eine Alkalibatterie bekanntgeworden, bei der ein Isolator wie z. B. Glas oder Keramik unmittelbar durch eine Schmelzverbindung mit einem Metallteil verbunden ist.

Eines der Metallteile ist elektrisch mit einer Anode der Alkalibatterie und das andere elektrisch mit einer Kathode der Alkalibatterie verbunden. Bei den in der DE 27 33 948 A1 verwandten Metallen handelt es sich um Eisen oder Stahl. Leichtmetalle wie Aluminium sind in der DE 27 33 948 A1 nicht beschrieben. Auch die Verschmelztemperatur des Glas- oder Keramikmaterials ist in der DE 27 33 948 A1 nicht angegeben. Bei der in der DE 27 33 948 A1 beschriebenen Alkalibatterie handelt es sich um eine Batterie mit einem alkalischen Elektrolyten, der gemäß der DE 27 33 948 A1 Natriumhydroxid oder Kaliumhydroxid enthält. Eine Erwähnung von Li-Ionen-Batterie findet sich in der DE 27 33 948 A1 nicht.

Aus der DE 698 04 378 T2 bzw. der EP 0 885 874 B1 ist ein Verfahren zur Herstellung von asymmetrischen organischen Carbonsäureestern und zur Herstellung von wasserfreien organischen Elektrolyten für Alkali-Ionen-Batterien bekanntgeworden. Auch Elektrolyte für wiederaufladbare Lithium-Ionenzellen sind in der DE 698 04 378 T2 bzw. EP 0 885 874 B1 beschrieben.

Materialien für den Zellsockel, der die Durchkontaktierung aufnimmt, sind nicht beschrieben, lediglich Materialien für den Anschlussstift, der aus Titan, Aluminium, einer Nickellegierung oder rostfreiem Stahl bestehen kann.

Die DE 699 23 805 T2 bzw. EP 0 954 045 B1 beschriebt eine RF-Durchführung mit verbesserter elektrischer Wirksamkeit. Bei den aus der EP 0 954 045 B1 bekannten Durchführungen handelt es sich nicht um eine Glas-Metall-Durchführung. In der EP 0 954 045 B1 werden Glas-Metall-Durchführungen, die unmittelbar innerhalb beispielsweise der Metallwand einer Verpackung ausgebildet werden als nachteilig beschrieben, da derartige RF-Durchführungen auf Grund der Versprödung des Glases nicht dauerhaft sind.

Die DE 690 230 71 T2 bzw. EP 0 412 655 B1 beschreibt eine Glas-Metall-Durchführung für Batterien oder andere elektrochemische Zellen, wobei als Gläser mit einem SiO₂-Gehalt von ungefähr 45 Gew.-% verwandt werden und als Metalle, insbesondere Legierungen verwandt werden, die Molybdän und/oder Chrom und/oder Nickel umfassen. Die Verwendung von Leichtmetallen ist in der DE 690 23 071 T2 ebenso wenig beschrieben wie Verschmelztemperaturen bzw. Verschmelzungstemperaturen für die verwandten Gläser. Auch die Materialien für die stiftförmigen Leiter sind gemäß DE 690230 71 T2 bzw. EP 0 412 655 B1 Legierungen, die Molybdän, Niob oder Tantal umfassen.

Aus der US 7,687,200 A ist eine Glas-Metall-Durchführung für Lithium-Ionen-Batterien bekannt geworden. Gemäß der US 7,687,200 A war das Gehäuse aus Edelstahl und der stiftförmige Leiter aus Platin/Iridium. Als Glasmaterialien sind in der US 7,687,200 A die Gläser TA23 und CABAL-12 angegeben. Gemäß der US 5,015,530 A handelt es sich dabei um CaO-MgO-Al₂O₃-B₂O₃-Systeme mit Verschmelztemperaturen von 1025° C bzw. 800° C. Des Weiteren sind aus der US 5,015,530 A Glaszusammensetzungen für Glas-Metall-Durchführungen für Lithium-Batterien bekannt geworden, die CaO, Al₂O₃, B₂O₃, SrO und BaO umfassen, deren Verschmelztemperaturen im Bereich 650° C - 750° C liegen und damit zu hoch sind für eine Verwendung zusammen mit Leichtmetallen.

Aus der US 4,841,101 A ist eine Durchführung bekanntgeworden, bei der ein im wesentlicher stiftförmiger Leiter mit einem Glasmaterial in einen Metallring eingeglast wird. Der Metallring wird dann wiederum in eine Öffnung beziehungsweise Bohrung eines Gehäuses eingesetzt und durch Löten beispielsweise nach Einspringen eines Lötringes, mit der Innenwand beziehungsweise Bohrung verbunden, insbesondere stoffschlüssig. Der Metallring besteht aus einem Metall, das im Wesentlichen denselben beziehungsweise einen ähnlichen thermischen Ausdehnungskoeffizient aufweist wie das Glasmaterial um den hohen thermischen Ausdehnungskoeffizienten des Aluminiums des Batteriegehäuses zu kompensieren. Bei der in der US 4,841,101 A beschriebenen Ausführungsform ist die Länge des Metallringes stets kürzer als die Bohrung beziehungsweise Öffnung im Gehäuse. Angaben zu den Glaszusammensetzungen sind in der US 4,841,101 A nicht gemacht, auch eine spezielle Verwendung der Durchführung beispielsweise für Batterien, insbesondere Li-Ionen-Akkumulatoren ist nicht beschrieben. Die US 3,006, 984 A beschreibt einen in ein Glasmaterial eingebrachten Leiter, wobei ein Druck auf das Glasmaterial durch einen Metallring aufgebracht wird. Beim Glasmaterial handelt es sich um ein Hartglas mit hohem SiO₂- Anteil.

Die DE 944 203 C zeigt eine druckdichte Leitungseinführung, wobei der Leiter durch eine Glasperle geführt wird.

Die US 5,373,519 A zeigt einen Halbleiterlaser.

Aus der GB 699 492 A1 ist eine Durchführung eines Leiters durch eine Glasperle bekannt geworden.

Die US 2013/013 4194 A1 zeigt eine hermetisch dichte Durchführung durch ein Glasmaterial, wobei das Glasmaterial ein Phosphatglas mit einem hohen P₂O₅-Anteil ist. Der Leiter ist aus Metall und das das Glasmaterial umgebende Gehäuse aus Aluminium.

Aufgabe der Erfindung ist es somit, eine Durchführung anzugeben, die die Probleme des Standes der Technik vermeidet, insbesondere sollen Widerstandsverluste gering gehalten werden und nach Einbau der Durchführung in der Batteriezelle nur geringer Bauraum beansprucht werden.

Erfindungsgemäß wird dies gemäß Anspruch 1 durch eine Durchführung, umfassend wenigstens einen Leiter mit einem Querschnitt in einem Glas- oder Glaskeramikmaterial zum Einbringen in eine Öffnung eines Gehäuseteiles eines Gehäuses gelöst.

Die Erfindung ist dadurch gekennzeichnet, dass der Leiter wenigstens zwei Abschnitte aufweist, einen ersten Abschnitt mit einem ersten, im Wesentlichen runden, insbesondere kreisrunden Querschnitt, wobei der erste Abschnitt des Leiters in der Durchführung in einem Glas- oder Glaskeramikmaterial eingeglast ist und einen zweiten Abschnitt mit einem zweiten, nicht runden, insbesondere einem im Wesentlichen rechteckigen Querschnitt und der Leiter mit erstem und zweitem Abschnitt einstückig ausgebildet ist.

In einer bevorzugten Ausführungsform ist das Gehäuse aus einem Metall, insbesondere einem Leichtmetall, bevorzugt Aluminium, eine Aluminiumlegierung, Magnesium, eine Magnesiumlegierung, Titan, einer Titanlegierung oder aus einem Metall, insbesondere Stahl, Edelstahl, insbesondere Nirosta-Stahl oder AlSiC.

Da bei der erfindungsgemäßen Ausgestaltung der Leiter bei seinem zur Batteriezelle hin gerichteten Ende bereits den Abschnitt ausbildet, der als Kathode bzw. Anode für die elektrochemische Zelle dient, beziehungsweise mit der Anode oder Katode verbindbar ist. Kann im Gegensatz zu Ausführungsformen, bei denen an den Leiter ein separates Elektrodenverbindungsbauteil, beispielsweise durch Schweißen, angebracht wird, der Fertigungsaufwand minimiert werden, da keine zwei Teile verbunden werden müssen.

Durch den im Wesentlichen rechteckigen Querschnitt im zweiten Abschnitt kann die elektrochemische Zelle sehr einfach an den flachen Teil des zweiten Abschnittes angeschlossen werden. Der im Wesentlichen runde Querschnitt im ersten Abschnitt im Bereich der Einglasung sorgt für eine einfache und zuverlässige Einglasbarkeit, was die Fertigung wesentlich vereinfacht.

In einer bevorzugten Ausgestaltung umfasst der zweite Abschnitt wenigstens zwei Abknickungen und damit zwei Bereiche. Hierdurch kann der Elektrodenabstand leicht für unterschiedliche Batteriezellen eingestellt werden. Insbesondere umfasst der zweite Abschnitt einen Bereich, mit Anode und/oder Kathode der elektrochemischen Zelle verbindbar ist und einen weiteren Bereich. Mit dem weiteren Bereich kann der Elektrodenabstand in der Batteriezelle an die jeweilige Batteriezelle leicht angepasst.

Um Platz im Innenraum der Batteriezelle zu sparen, ist in einer weitergebildeten Ausführungsform der Erfindung vorgesehen, dass der weitere Bereich des zweites Abschnittes im Wesentlichen horizontal verläuft und senkrecht zum ersten Abschnitt und/oder zum Bereich ist, der mit der Anode und/oder Kathode der elektrochemischen Zelle verbindbar ist.

Um Widerstandsverluste bei der Stromleitung zu vermeiden und damit eine zu hohe Wärmebelastung der Batteriezelle, ist es gemäß Anspruch 1 vorgesehen, dass der erste Querschnitt des ersten Abschnittes im Wesentlichen gleich groß ist wie der zweite Querschnitt des zweiten Abschnittes.

Um ein Verbiegen des Leiters zu vermeiden, insbesondere im Bereich des zweiten Abschnittes, ist vorgesehen, dass der zweite Abschnitt eine Versteifung, insbesondere ein U-Profil, bevorzugt im weiteren Bereich des zweiten Abschnittes, umfasst.

In einer Ausgestaltung der Durchführung wird der Leiter durch das Gehäuseteil mittels eines zusätzlichen Grundkörpers, in dem der Leiter eingeglast wird, hindurchgeführt. Eine derartige Ausgestaltung ermöglicht es, die Durchführung vorzufertigen, d.h. den Leiter in den Grundkörper einzuglasen und anschließend in das Gehäuseteil, insbesondere in eine Batteriezelle, einzubauen. Der Grundkörper kann dann auf die jeweilige Herstelltechnologie und Form der Durchführung sowie der Herstelltechnologie und Form des Gehäuseteils optimiert getroffen werden. Insbesondere können durch die Vorfertigung wesentlich kleinere Heizeinrichtungen als bei einer Einglasung direkt in das Gehäuseteil verwendet werden, da nicht das gesamte Gehäuseteil, z. B. in einem Ofen erwärmt werden muss, sondern lediglich der Grundkörper mit wesentlich geringeren Abmessungen. Des Weiteren ermöglicht eine derartige Ausgestaltung, bei der eine Vorfertigung der Durchführung aus einem Grundkörper und einem Leiter, insbesondere einem im Wesentlichen stiftförmigen Leiter möglich ist, ein kostengünstiges Einbringen der Durchführung in die Öffnung des Gehäuseteils, beispielsweise in einem einstufigen Prozess, beispielsweise unter Ausnutzung der Kaltverfestigungsmöglichkeiten des Gehäuseteils. Konkret bedeutet dies, dass zunächst in das Gehäuseteil, beispielsweise in den Deckel die Öffnung, z. B. durch Stanzen, eingebracht wird. Das Gehäuse ist kaltverfestigt, da es nicht erhitzt wird. Im Gegensatz hierzu ist der Grundkörper weich, da er beim Einglasen des stiftförmigen Leiters mit einem Glas- oder Glaskeramikmaterial erhitzt wird. Auf diese Art und Weise ist es möglich, ein strukturfestes Batteriezellengehäuse, insbesondere im Bereich der Durchführungen herstellen zu können, da im Gegensatz beispielsweise zu einer Direkteinglasung in ein Gehäuseteil kein Verlust der Kaltverfestigung des Gehäuseteils, insbesondere Deckteils auftritt. Ein weiterer Vorteil ist, dass die Materialstärke des Gehäuseteils gegenüber dem Grundkörper, in den die Einglasung erfolgt deutlich geringer gewählt werden kann. Beispielsweise kann die Materialstärke des Gehäuseteils 1,5 mm und weniger betragen, wohingegen der Grundkörper aus Festigkeitsgründen eine Dicke von 2,0 mm, insbesondere 3,0 mm und mehr umfasst. Die Materialstärke des Gehäuses beziehungsweise Gehäuseteils liegt bevorzugt zwischen 1 mm und 3 mm, bevorzugt zwischen 1,5 mm und 3 mm. Die Dicke des Grundkörpers zwischen 2 mm und 6 mm, bevorzugt 2,5 mm und 5 mm. Die Dicke des Grundkörpers wird dabei immer angepasst an die Materialstärke des Gehäuses beziehungsweise Gehäuseteils, insbesondere des Batteriedeckels gewählt, in den die Durchführung eingesetzt wird. Alternativ zu einer Einglasung in einen Grundkörper und anschließendes Einsetzen des Grundkörpers in die Öffnung des Gehäuseteiles wäre auch eine Direkteinglasung möglich. Dies wird in Fällen favorisiert in denen Bauraumverluste minimiert werden sollen. Allerdings ist dann die Materialwahl für das Gehäuse und/oder das Glasmaterial beschränkt. Bei Verwendung eines Grundkörpers können vorteilhafterweise die Materialien für Grundkörper und Gehäuseteil unterschiedlich gewählt werden, insbesondere in Bezug auf die Materialqualität und die Wahl der Legierung. Die Durchführung kann mit dem Grundkörper im Gehäuseteil hermetisch dicht durch Schweißen, Löten, Einpressen, Einbördeln oder Einschrumpfen verbunden werden. Beim Verbinden der Durchführung mit dem Gehäusebauteil, z. B. durch Schweißen wird darauf geachtet, dass der Temperatureintrag so niedrig wie möglich ist, um eine Beschädigung des Glas- oder Glaskeramikmaterials zu vermeiden. Hermetisch dicht bedeutet in dieser Anmeldung, sowohl für die Direkteinglasung, wie für die Einglasung in einen Grundkörper, dass die Helium-Leckrate geringer als 1 ·10⁻⁸ mbar I/sec.ist. Gegenüber dem Stand der Technik, bei dem in einem mehrstufigen Prozess eine Kunststoffdichtung für die Durchführung zur Verfügung gestellt werden musste, ist eine hermetisch dichte Verbindung des erfindungsgemäßen Durchführungsbauteils mit dem Gehäuseteil in einem einzigen einfachen Verfahrensschritt herstellbar.

Des Weiteren kann die Auswahl des Grundkörpers auch mit Blick auf das Material des Gehäuseteils erfolgen, sowohl was die Randausführung als auch was die Materialhärte betrifft und insbesondere auch die Methode zum Verschließen des Gehäuses. Besteht das Gehäuse der Batteriezelle beispielsweise aus Aluminium, so kann als Material für den Grundkörper ebenfalls Aluminium gewählt werden.

Des Weiteren ist es möglich, zusätzlich zu den Durchführungen im Gehäuseteil des Gehäuses der Batteriezelle auch noch andere Funktionen einzubringen, beispielsweise ein Sicherheitsventil und/oder eine Batteriefüllöffnung.

Besonders bevorzugt ist es, wenn in einer ersten Ausgestaltung der Erfindung das Gehäuseteil und/oder der Grundkörper, bevorzugt der im Wesentlichen ringförmige Grundkörper, als Material ein Metall, insbesondere ein Leichtmetall, wie Titan, eine Titanlegierung, Magnesium, eine Magnesiumlegierung, eine Aluminiumlegierung, Aluminium, AlSiC, aber auch Stahl, rostfreier Stahl oder Edelstahl umfasst. Als Titanlegierungen können z. B. Ti6246 und/oder Ti6242 verwandt werden. Titan ist ein körperverträgliches Material, so dass es für medizinische Anwendungen, beispielsweise in der Prothetik, zum Einsatz kommt. Ebenso wird es wegen der besonderen Festigkeit, Beständigkeit und geringem Gewicht in besonderen Anwendungen gerne verwendet, beispielsweise im Rennsport, aber auch für Luft- und Raumfahrtanwendungen.

Für den Grundkörper und/oder das Gehäuseteil können auch hochlegierte Werkzeugstähle, die für eine spätere Wärmebehandlung vorgesehen sind, verwendet werden. Verwendbar als

Edelstähle sind beispielsweise X12CrMoS17, X5CrNi1810, XCrNiS189, X2CrNi1911, X12CrNi177, X5CrNiMo17-12-2, X6CrNiMoTi17-12-2, X6CrNiTi1810 und X15CrNiSi25-20, X10CrNi1808, X2CrNiMo17-12-2, X6CrNiMoTi17-12-2. Um eine besonders gute Verschweißbarkeit sowohl beim Laserschweißen wie auch beim Widerstandsschweißen zur Verfügung stellen zu können, als Material für den Grundkörper und/oder das Gehäuseteil, insbesondere das Batteriezellengehäuse, ganz besonders Edelstähle, insbesondere Cr-Ni-Stähle mit den Werkstoff-Nummern (WNr.) gemäß Euro-Norm (EN) 1.4301, 1.4302, 1.4303, 1.4304, 1.4305, 1.4306, 1.4307 verwandt. Als Normalstahl kann St35, St37 oder St38 verwandt werden.

Für den stiftförmigen Leiter wird insbesondere Kupfer (Cu) oder eine Kupferlegierung verwandt, wenn der stiftförmige Leiter an eine Kathode der elektrochemischen Zelle bzw. Batteriezelle angeschlossen wird und Aluminium (Al) oder eine Aluminiumlegierung, wenn der Leiter, insbesondere der stiftförmige Leiter, an eine Anode angeschlossen wird. Andere Materialien für den stiftförmigen Leiter können Magnesium, eine Magnesiumlegierung, eine Kupferlegierung, CuSiC, AlSiC, NiFe, eine Kupferseele, d. h. ein NiFe-Mantel mit Kupferinnenteil Silber, eine Silberlegierung, Gold, eine Goldlegierung sowie eine Kobalt-Eisen-Legierung sein.

Als Aluminium oder Aluminiumlegierungen, insbesondere für den Leiter, kommen in Frage:
EN AW-1050 A
EN AW-1350
EN AW-2014
EN AW-3003
EN AW-4032
EN AW-5019
EN AW-5056
EN AW 5083
EN AW-5556A
EN AW-6060
EN AW-6061.

Als Kupfer, insbesondere für den Leiter, kommen in Frage:
Cu-PHC 2.0070
Cu-OF 2.0070
Cu-ETP 2.0065
Cu-HCP 2.0070
Cu-DHP 2.0090.

In vorliegender Anmeldung werden unter Leichtmetallen Metalle verstanden, die ein spezifisches Gewicht geringer als 5,0 kg/dm³ aufweisen. Insbesondere liegt das spezifische Gewicht der Leichtmetalle im Bereich 1,0 kg/dm³ bis 3,0 kg/dm³.

Werden die Leichtmetalle zudem als Materialien für die Leiter, beispielsweise den stiftförmigen Leiter oder das Elektrodenverbindungsbauteil verwandt, so zeichnen sich die Leichtmetalle des Weiteren noch durch eine spezifische elektrische Leitfähigkeit im Bereich 5 · 10⁶S/m bis 50 · 10⁶S/m aus. Bei Einsatz in Druckglasdurchführungen liegt zudem noch der Ausdehnungskoeffizient α für den Bereich 20° C bis 300° C im Bereich 18 · 10⁻⁶/K bis 30 · 10⁻⁶/K.

Im Allgemeinen haben Leichtmetalle Schmelztemperaturen im Bereich 350° C bis 800° C.

Bevorzugt ist der Grundkörper als ringförmiger Grundkörper ausgebildet, bevorzugt in kreisrunder Form, aber auch in ovaler Form. Die ovale Form ist insbesondere dann bevorzugt, wenn das Gehäuseteil, insbesondere das Deckelteil der Batteriezelle, in deren Öffnung(en) die Durchführung eingebracht ist, eine schmale längliche Form aufweist und das Glas- bzw. Glaskeramikmaterial, mit dem der Leiter durch das Gehäuseteil in der Öffnung hindurchgeführt wird, vollständig zwischen dem Grundkörper und dem Leiter eingebracht ist. Eine derartige Ausgestaltung erlaubt es, die Durchführung, bestehend aus einem im Wesentlichen stiftförmigen Leiter und einem im Wesentlichen ringförmigen Grundkörper vorzufertigen.

Bevorzugt werden in einer Ausgestaltung als Glas- oder Glaskeramikmaterial derartige Materialien ausgewählt, die eine Verschmelztemperatur aufweisen, die geringer ist als die Schmelztemperatur des Grundkörpers und/oder des im Wesentlichen Leiters. Besonders bevorzugt sind hier Glas- oder Glaskeramikzusammensetzungen mit niedrigen Verschmelztemperaturen, bevorzugt Zusammensetzungen, umfassend die nachfolgenden Komponenten:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-%. |

Insbesondere bevorzugt ist die Zusammensetzung umfassend die nachfolgenden Komponenten:

| | |
|---|---|
| P₂O₅ | 38-50 mol.-%, insbesondere 39-48 mol.-% |
| Al₂O₃ | 3-14 mol.-%, insbesondere 2-12 mol.-% |
| B₂O₃ | 4-10 mol.-%, insbesondere 4-8 mol.-% |
| Na₂O | 10-30 mol.-%, insbesondere 0-20 mol.-% |
| K₂O | 10-20 mol.-%, insbesondere 12-19 mol.-% |
| PbO | 0-10 mol.-%., insbesondere 0-9 mol.-% |

Die vorher angegebenen Glaszusammensetzungen zeichnen sich nicht nur durch eine niedrige Verschmelztemperatur und ein niedriges Tg aus, sondern auch dadurch, dass sie gegenüber Batterie-Elektrolyten eine ausreichend hohe Beständigkeit aufweisen und insoweit die geforderte Langzeitbeständigkeit gewährleisten.

Bei den als bevorzugt angegebenen Glasmaterialien handelt es sich um stabile Phosphatgläser, die einen deutlich niedrigeren Gesamtalkaligehalt als bekannte Alkali-Phosphat-Gläser aufweisen.

Durch die in der Regel hohe Kristallisationsstabilität der Phosphatgläser wird sichergestellt, dass das Aufschmelzen der Gläser auch bei Temperaturen in der Regel < 600° C nicht behindert wird. Dies ermöglicht es, dass die angegebenen Glaszusammensetzungen als Glaslot verwendet werden können, da das Aufschmelzen der Glaszusammensetzungen auch bei Temperaturen in der Regel < 600° C nicht behindert wird.

Die zuvor genannten Glaszusammensetzungen weisen Li auf, das in die Glasstruktur eingebaut ist. Hierdurch eignen sich die Glaszusammensetzungen, insbesondere für Li-Ionen-Speichereinrichtungen, die Elektrolyten basierend auf Li, beispielsweise einer 1 M LiPF₆-Lösung umfassend eine 1:1 Mischung aus Ethylencarbonat und Dimethylcarbonat umfassen.

Besonders bevorzugt sind natriumarme bzw. natriumfreie Glaszusammensetzungen, da die Diffusion der Alkali-Ionen in der Reihenfolge Na+>K+>Cs+ erfolgt und daher natriumarme bzw. natriumfreie Gläser besonders beständig gegenüber Elektrolyten, insbesondere solchen, wie sie in Li-Ionen-Speichereinrichtungen verwandt werden, sind.

Des Weiteren zeigen derartige Glaszusammensetzungen eine thermische Ausdehnung α im Bereich 20° C bis 300° C > 14 ·10⁻⁶/K, insbesondere zwischen 15 ·10⁻⁶/K und 25 · 10⁻⁶/K. Ein weiterer Vorteil der zuvor angegebenen Glaszusammensetzung ist darin zu sehen, dass eine Verschmelzung des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für Al-Verschmelzungen entgegen den bisherigen Verfahren nicht notwendig. Vielmehr kann eine derartige Verschmelzung auch unter Luft erfolgen. Für beide Arten der Verschmelzungen kann als Schutzgas N₂ oder Ar benutzt werden. Als Vorbehandlung zum Verschmelzen wird das Metall, insbesondere das Leichtmetall gereinigt und/oder geätzt, wenn nötig gezielt oxidiert oder beschichtet. Während des Prozesses werden Temperaturen zwischen 300° C und 600 °C mit Heizraten von 0.1 bis 30 K/min und mit Haltezeiten von 1 bis 60 min verwandt.

Die Verschmelztemperatur kann beispielsweise über die Halbkugeltemperatur wie in R. Görke, K.-J. Leers: Keram. Z. 48 (1996) 300-305, bzw. nach DIN 51730, ISO 540 oder CEN/TS 15404 und 15370-1 beschrieben, bestimmt werden. Die Messung der Halbkugeltemperatur ist ausführlich in der DE 10 2009 011 182 A1, beschrieben. Gemäß der DE 10 2009 011 182 A1 kann die Halbkugeltemperatur in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 dPas zuordnen, wie entsprechender Fachliteratur entnommen werden kann. Wird ein kristallisationsfreies Glas beispielsweise in Form eines Glaspulvers aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glas, dass die Betriebstemperatur, welcher die Fügeverbindung dauerhaft ausgesetzt sein kann, nicht höher als die Verschmelztemperatur sein darf. Glaszusammensetzungen wie sie vorliegend eingesetzt werden, werden im Allgemeinen oftmals aus einem Glaspulver hergestellt, das aufgeschmolzen wird und unter Wärmeeinwirkung mit den zu verbindenden Bauteilen die Fügeverbindung ergibt. Die Verschmelztemperatur bzw. Schmelztemperatur entspricht in der Regel etwa der Höhe der so genannten Halbkugeltemperatur des Glases. Gläser mit niedrigen Verschmelztemperaturen bzw. Schmelztemperatur werden auch als Glaslote bezeichnet. Anstelle von Verschmelz- oder Schmelztemperatur wird in einem solchen Fall von Lottemperatur bzw. Löttemperatur geredet. Die Verschmelztemperatur bzw. Lottemperatur kann um ±20 K von der Halbkugeltemperatur abweichen.

Besonders bevorzugt ist es, wenn das Gehäuseteil des Batteriegehäuses beziehungsweise Batteriezellengehäuses eine Außen- und Innenseite aufweist und der Grundkörper der Durchführung mit der Innen- oder Außenseite des Gehäuseteils verbunden wird, insbesondere beispielsweise durch Bördeln, Schweißen, Einpressen, Löten oder Einschrumpfen.

Hierzu ist es besonders bevorzugt, wenn der Grundkörper einen Überstand aufweist, so dass ein Teil des Grundkörpers in die Öffnung des Gehäuseteils eingreift, ein anderer Teil des Grundkörpers über die Öffnung hinausragt und auf der Innen- oder Außenseite des Gehäuseteils aufliegt bzw. dort mit dem Gehäuseteil verbunden werden kann.

Neben der Durchführung stellt die Erfindung auch ein Gehäuse, insbesondere für eine elektrische Speichereinrichtung, insbesondere eine Batteriezelle zur Verfügung. Das Gehäuse umfasst wenigstens ein Gehäuseteil mit wenigstens einer Öffnung und ist dadurch gekennzeichnet, dass die Öffnung des Gehäuseteils eine erfindungsgemäße Durchführung mit wenigstens einem stiftförmigen Leiter, der in einen Grundkörper eingeglast ist, aufnimmt.

Ganz bevorzugt handelt es sich bei der Batteriezelle, für die das Gehäuse zur Verfügung gestellt wird, um eine Batteriezelle für eine Lithium-Ionen-Batterie.

Des Weiteren stellt die Erfindung ein Verfahren zum Herstellen einer Durchführung gemäß Anspruch 14 mit wenigstens einem im Wesentlichen stiftförmigen Leiter zur Verfügung, wobei das Verfahren die folgenden Schritte umfasst:
- es wird ein Leiter, der im Wesentlichen stiftförmig sein kann, aber nicht muss mit bevorzugt rundem, insbesondere kreisrundem Querschnitt, derart umgeformt, dass der Leiter zwei Abschnitte aufweist, einen ersten Abschnitt mit einem im Wesentlichen runden, insbesondere kreisrunden Querschnitt und einen zweiten Abschnitt mit einem im Wesentlichen nicht runden, insbesondere rechteckigen Querschnitt
- der Leiter, insbesondere der im Wesentlichen stiftförmige Leiter wird im ersten Abschnitt in ein Glas- oder Glaskeramikmaterial eingeglast ergebend die Durchführung für ein Gehäuseteil eines Gehäuses, insbesondere eines Batteriezellengehäuses.

Besonders vorteilhaft ist es, wenn der Leiter vor Einsetzen in die Öffnung des Gehäuseteiles in einen Grundkörper eingeglast wird und der Grundkörper mit dem eingeglasten Leiter anschließend in eine Öffnung des Gehäuseteils eingebracht wird. Die Vorteile eines derartigen Vorgehens sind zuvor ausführlich beschrieben.

Daneben ist auch eine direkte Einglasung möglich, d. h. die Einglasung erfolgt direkt in das Deckelteil des Gehäuses, was insbesondere unter Bauraumaspekte vorteilhaft ist.

Um die Elektrodenabstände einstellen zu können, ist vorgesehen, dass der Leiter derart umgeformt wird, dass der zweite Abschnitt des Leiters zwei Abknickungen aufweist.

Eine besonders leichte Anpassung der Elektrodenabstände an unterschiedliche Batteriezellen wird erreicht, wenn der zweite Abschnitt des Leiters derart umgeformt wird, dass er einen Bereich umfasst, der als Anode und/oder Kathode der elektrochemischen Zelle dienen kann oder mit Anode und/oder Kathode verbindbar ist und einen weiteren Bereich, der im Wesentlichen horizontal verläuft und senkrecht zum ersten Abschnitt und/oder zum Bereich ist, der mit Anode und/oder Kathode verbindbar ist.

Daneben wird ein Verfahren zum Versehen einer Batteriezelle (1000) mit einer Durchführung gemäß Anspruch 16 gezeigt, dass sich dadurch auszeichnet, dass bei einer Durchführung mit einem Grundkörper und darin eingeglastem Leiter, insbesondere stiftförmigen Leiter, der Grundkörper mit dem Gehäusebauteil durch Schweißen, bevorzugt Laserstrahlschweißen, Elektronenstrahlschweißen, Ultraschallschweißen, Widerstandsschweißen sowie alternativ durch Löten, Einschrumpfen, Einpressen oder Einbördeln verbunden wird.

Die Erfindung soll nachfolgend anhand der Ausführungsbeispiele und der Zeichnungen ohne Beschränkung hierauf näher beschrieben werden.

Es zeigen:
- Fig. 1a-1b: ein Beispiel einer ersten Ausgestaltung einer Durchführung mit einem Metallstift und einem Grundkörper in einem Gehäuseteil, wobei der Grundkörper als Flanschring ausgebildet ist;
- Fig. 2a-2b: ein Beispiel einer zweiten Ausgestaltung einer Durchführung mit einem Grundkörper, der als Schweißring ausgebildet ist;
- Fig. 3: ein Beispiel einer dritten Ausführungsform einer Durchführung, bei der der Grundkörper durch Laserschweißen, Löten, Einschrumpfen oder Elektronenschweißen im Bereich der Öffnung mit dem Gehäuseteil verbunden wird;
- Fig. 4a-4c: ein Beispiel einer vierten Ausführungsform einer Durchführung mit einem konischen Ring als Grundkörper, der in eine Öffnung des Gehäuseteils eingesetzt wird;
- Fig. 5a - 5b: ein Beispiel einer Durchführung mit thermischer Barriere und mechanischer Entlastung;
- Fig. 6a - 6b: ein Beispiel einer Durchführung mit thermischer Barriere und mechanischer Entlastung;
- Fig. 7a-7b: Batteriezelle mit einem Batteriezellengehäuse und einer Durchführung mit Durchführungsbauteil mit Elektroden-Verbindungsbauteil in zweiteiliger Ausführung in einer ersten Ausgestaltung;
- Fig. 8a-8b: Batteriezelle mit einem Batteriezellengehäuse und einer Durchführung mit Durchführungsbauteil mit Elektroden-Verbindungsbauteil in zweiteiliger Ausgestaltung in einer zweiten Ausgestaltung;
- Fig. 9a-9c: Deckelteil für ein Batteriezellengehäuse einer Batteriezelle mit einer Durchführung mit Durchführungsbauteil gemäß der Erfindung in einteiliger Ausführungsform in einer ersten bis dritten Ausgestaltung;
- Fig. 10a-10c: Deckelteil für ein Batteriezellengehäuse einer Batteriezelle mit einer Durchführung in einteiliger Ausführungsform in einer vierten Ausgestaltung; wobei der Leiter direkt in die Öffnung des Deckelteiles eingeglast ist.
- Fig. 10d-10e: Detaillierte Darstellung eines Leiters der Durchführung gemäß Fig. 10a-10c;
- Fig. 11a-11c: Deckelteil für ein Batteriezellengehäuse für eine Batteriezelle mit einer Durchführung in einteiliger Ausführung in einer fünften Ausgestaltung; wobei der Leiter direkt in die Öffnung des Deckelteiles eingeglast ist.
- Fig. 11d-11e: Detaillierte Darstellung eines Leiters der Durchführung gemäß Fig. 11a-11c.

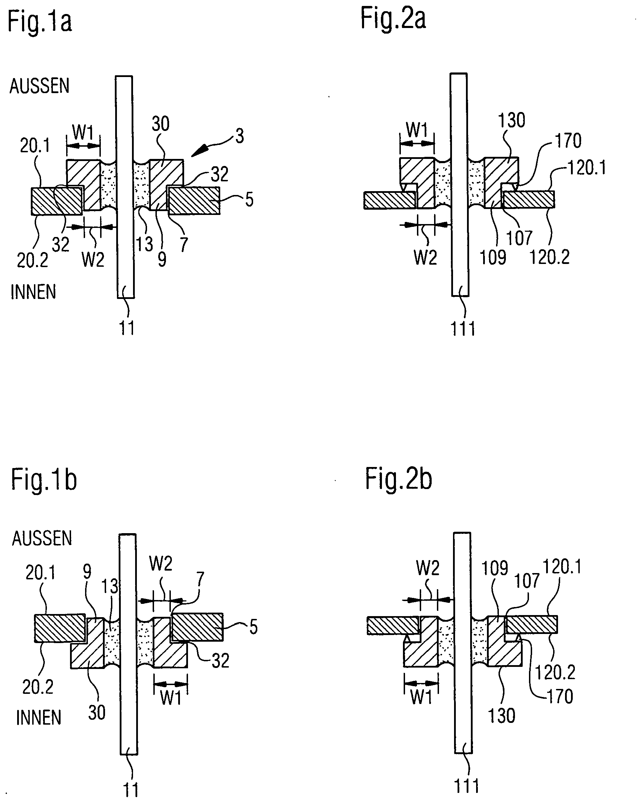

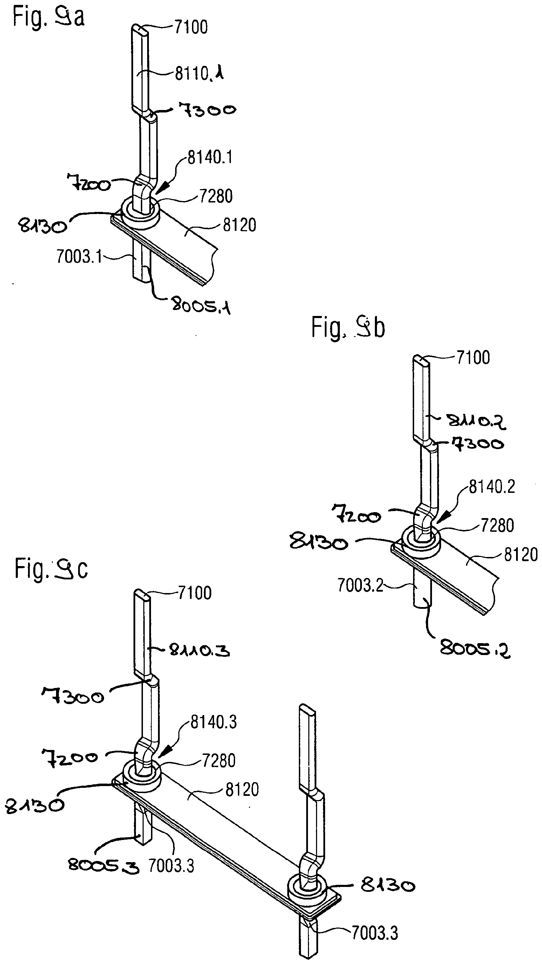

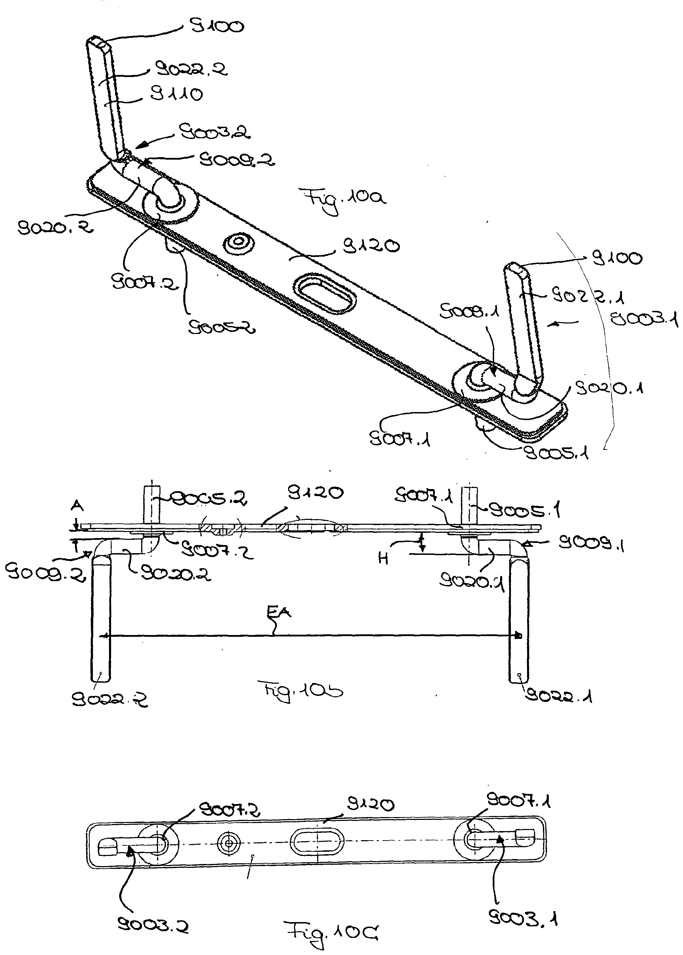

In den Figuren 1a bis 6b sind Beispiele für Durchführungen angegeben, bei denen die Durchführungen Grundkörper umfassen, in denen ein Leiter, insbesondere ein stiftförmiger Leiter, eingeglast ist. Die Durchführungen mit einem Grundkörper sind für die Erfindung beispielhaft, aber nicht zwingend. Selbstverständlich wären auch Direkteinglasungen möglich, wie beispielsweise bei Fig. 10a bis 11e gezeigt. In den Figuren 1a bis 6b sind nur die Leiter im Bereich der Einglasung gezeigt. Betreffend die erfindungsgemäßen Leiter mit zwei Abschnitten in einteiliger Ausgestaltung wird auf die Figuren 9a bis 11e verwiesen.

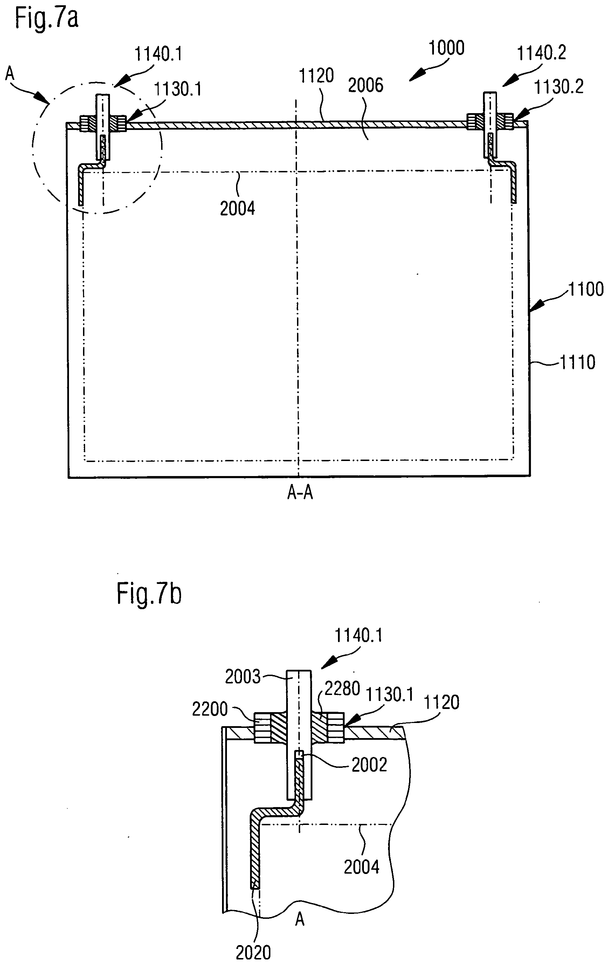

In Fig. 1a ist eine Durchführung 3 durch ein Gehäuseteil 5 eines Gehäuses, vorzugsweise eines Gehäuses für einen Akkumulator, insbesondere einer Batteriezelle für eine Lithium-Ionen-Batterie, gemäß beispielsweise Fig. 7a - 11c, gezeigt.

Das Gehäuseteil 5 umfasst eine Öffnung 7, die in das Gehäuseteil eingelassen ist. In die Öffnung 7 ist die erfindungsgemäße Durchführung, umfassend den Grundkörper, insbesondere den im Wesentlichen ringförmigen Grundkörper 9, der einen Abschnitt eines Leiters, insbesondere eines im Wesentlichen stiftförmigen Leiters 11 aufnimmt, eingebracht. Bei der dargestellten Ausführungsform ist in dem im Wesentlichen ringförmigen Grundkörper 9 ein Abschnitt, insbesondere der erste Abschnitt mit im Wesentlichen runden, insbesondere kreisrunden Querschnitt des Leiters eingeglast. Um eine hermetische Durchführung des Leiters, insbesondere des im Wesentlichen stiftförmigen Leiters 11 durch den Grundkörper und damit die Öffnung 7 bereitzustellen, ist der Abschnitt des im Wesentlichen stiftförmigen Leiters 11 in einen Glaspfropfen aus einem Glas- oder Glaskeramikmaterial eingeschmolzen, d.h. der Grundkörper 9 und der im Wesentlichen stiftförmige Leiter 11 sind mit dem Glas 13 verschmolzen. Werden Materialien mit unterschiedlichem Ausdehnungskoeffizient α verwandt, z. B. für den Grundkörper, den stiftförmigen Leiter und das Glasmaterial, so kann eine sogenannte Druckglasdurchführung zur Verfügung gestellt werden. Der Vorteil einer Druckglasdurchführung besteht darin, dass auch unter erhöhten Belastungen auf den Glaspfropfen, z. B. bei Druckbelastung ein Herausdrücken des Glaspfropfens mit dem Metallstift aus dem Grundkörper vermieden wird. Bevorzugt ist vorgesehen, dass die Verschmelztemperatur des Glas- oder Glaskeramikmaterials 20 K bis 100 K unterhalb der Schmelztemperatur des Materials des Grundkörpers 9 und/oder des stiftförmigen Leiters liegt. Ist der Grundkörper 9 aus einem niedrig schmelzenden Metall, insbesondere einem Leichtmetall, bevorzugt Aluminium, einer Aluminiumlegierung, Magnesium, einer Magnesiumlegierung oder AlSiC, Titan, einer Titanlegierung, aber auch Stahl, rostfreier Stahl oder Edelstahl, so wird bevorzugt ein Glasmaterial, durch das der Leiter hindurchgeführt wird, eingesetzt, das die nachfolgenden Komponenten in mol.-% umfasst:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-%, ganz besonders bevorzugt PbO 0 mol-% |
| Li₂O | 0-45 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-%. |

In einer besonders bevorzugten Ausführungsform umfasst die Glaszusammensetzung nachfolgende Komponenten in mol.-%:

| | |
|---|---|
| P₂O₅ | 38-50 mol.-%, insbesondere 39-48 mol.-% |
| Al₂O₃ | 3-14 mol.-%, insbesondere 4-12 mol.-% |
| B₂O₃ | 4-10 mol.-%, insbesondere 4-8 mol.-% |
| Na₂O | 10-30 mol.-%, insbesondere 14-20 mol.-% |
| K₂O | 10-20 mol.-%, insbesondere 12-19 mol.-% |
| PbO | 0-10 mol.-%, insbesondere 0-9 mol.-%, ganz besonders bevorzugt PbO 0 mol-% |

In einer bevorzugten Ausführungsform umfasst die Glaszusammensetzung wenigstens 17 mol-% Li₂O und höchstens 35 mol-% Li₂O. Derartige Glaszusammensetzungen sind sowohl ausreichend beständig gegenüber Elektrolyten, die Li enthalten, als auch ausreichend kristallisationsstabil, wodurch ein Aufschmelzen der Gläser bei Temperaturen in der Regel < 600° C nicht behindert wird.

In einer besonders bevorzugten Glaszusammensetzung umfasst diese 4-8 mol-% Bi₂O₃. Bi₂O₃ kann insbesondere das umweltschädliche PbO ersetzen. Des Weiteren kann durch den Zusatz von Bi₂O₃ die Wasserbeständigkeit deutlich erhöht werden. Insbesondere kann durch nur einen geringen Zusatz von 1 mol.-% Bi₂O₃ bereits eine Alkali-Phosphatglaszusammensetzung mit im wesentlichen gleichem Alkaligehalt überraschenderweise ungefähr 10-fach wasserbeständiger gemacht werden als eine Alkali-Phosphatglaszusammensetzung in dem kein Bi₂O₃ bis auf Verunreinigungen vorhanden ist. Dieser Effekt war für einen Fachmann überraschend.

Besonders bevorzugt sind aus Umweltgründen Gläser, die bis auf Verunreinigungen frei von Pb sind, d. h. PbO ist 0 mol-%. Frei von Pb bis auf Verunreinigungen bedeutet in dieser Anmeldung, wie zuvor ausgeführt, dass das Glas eine Menge < 100 ppm, bevorzugt < 10 ppm, ganz bevorzugt < 1 ppm Blei umfasst.

Nachfolgend werden acht Ausführungsbeispiele in Tabelle 1 für die zuvor genannten Glaszusammensetzungen angegeben.

**Tabelle 1:**

| Ausführungsbeispiele: | | | | | | | | |
|---|---|---|---|---|---|---|---|---|
| | AB1 | AB2 | AB3 | AB4 | AB5 | AB6 | AB7 | AB8 |
| Mol-% | | | | | | | | |
| P₂O₅ | 47.6 | 43.3 | 43.3 | 43.3 | 37.1 | 40.0 | 42,0 | 46,5 |
| B₂O₃ | 7.6 | 4.8 | 4.7 | 4.8 | 4.9 | 6.0 | 6,0 | 7,6 |
| Al₂O₃ | 4.2 | 8.6 | 8.7 | 2.0 | 2 | 12.0 | 12,0 | 4,2 |
| Na₂O | 28.3 | 17.3 | | | | 15.0 | 16.0 | 28,3 |
| K₂O | 12.4 | 17.3 | 17.3 | | | 18.0 | 19.0 | 12,4 |
| PbO | | | | | | 9.0 | | |
| BaO | | 8.7 | 8.7 | 15.4 | 14 | | | |
| Li₂O | | | 17,3 | 34,6 | 42,1 | | | |
| Bi₂O₃ | | | | | | | 5 | 1 |
| Halbkugel Temperatur(°C) | 513 | 554 | 564 | 540 | 625 | | 553 | 502 |
| α(20-300° C) (10⁻⁶/K) | 19 | 16,5 | 14,9 | 13,7 | 14,8 | 16.7 | 16,0 | 19,8 |
| Tg (°C) | 325 | 375 | 354 | 369 | 359 | 392 | 425 | 347 |
| Dichte [g/cm³] | 2,56 | | | | | 3 | 3,02 | 2,63 |
| Auslaugung In Ma-% | 18,7 | 14,11 | 7,66 | 12,63 | 1,47 | 3,7 | 29,01 | 8,43 |
| Gewichtsverlust(%) nach 70h in 70°C-Wasser | 10,7 | 0,37 | 0,1 | 0,13 | 0,13 | n.B. | 0,006/0,001 | 0.45/0,66 |

Die oben angegebene spezielle Glaszusammensetzung zeichnet sich dadurch aus, dass die Glasmaterialien sehr hohe thermische Dehnungen aufweisen, die im Bereich > 15 x 10⁻⁶ K⁻¹, bevorzugt im Bereich 15 x 10⁻⁶ K⁻¹ bis 25 x 10⁻⁶ K⁻¹ für Temperaturen zwischen 20° C und 300° C liegen und damit in dem Bereich der thermischen Ausdehnung von Leichtmetallen wie Aluminium, aber auch von ähnlichen Metallen für die im Wesentlichen stiftförmigen Leiter 11, die durch das Glasmaterial durchgeführt, nämlich beispielsweise Kupfer. So besitzt Aluminium bei Zimmertemperatur eine thermische Ausdehnung α = 23 x 10⁻⁶/K, Kupfer von 16,5 x 10⁻⁶/K. Um zu verhindern, dass beim Einglasen das Leichtmetall des Grundkörpers und eventuell auch des Metallstifts schmilzt oder deformiert, liegt die Schmelztemperatur des Glasmaterials unterhalb der Schmelztemperatur des Materials des Grundkörpers und/oder Leiters. Die Verschmelztemperatur der angegebenen Glaszusammensetzung liegt dann im Bereich 250° C bis 650° C.

Das Einglasen des im Wesentlichen stiftförmigen Leiters 11 in den Grundkörper 9 vor Einsetzen der Durchführung in die Öffnung 7 wird dadurch erreicht, dass das Glas zusammen mit dem Leiter, insbesondere dem stiftförmigen Leiter, auf die Verschmelztemperatur des Glases erwärmt wird, so dass das Glasmaterial erweicht und in der Öffnung den Leiter, insbesondere den stiftförmigen Leiter, umschließt und am Grundkörper 9 anliegt. Wird, wie oben beschrieben, beispielsweise Aluminium als Leichtmetall mit einem Schmelzpunkt T_{Schmelz} = 660,32° C für den Grundkörper 9 verwandt, so liegt die Verschmelztemperatur des Glasmaterials, wie oben angegeben, bevorzugt im Bereich 350° C bis 640° C.

Bevorzugt ist das Material des stiftförmigen Leiters 11 identisch zum Material des Grundkörpers, was den Vorteil hat, dass der Ausdehnungskoeffizient für den Grundkörper und für den Metallstift identisch ist. Der stiftförmige Leiter kann als Material Aluminium, eine Aluminiumlegierung, AlSiC, Kupfer, eine Kupferlegierung, CuSiC- oder NiFe-Legierungen, eine Kupferseele, d. h. ein NiFe-Mantel mit Kupferinnenteil oder CF25, d. h. eine Kobalt-Eisenlegierung, Silber, eine Silberlegierung, Gold oder eine Goldlegierung umfassen. Ist der Ausdehnungskoeffizient α im Bereich 20° C bis 300° C des Glas- oder Glaskeramikmaterials nicht vollständig an das Material des Grundkörpers angepasst, so wird eine Druckglasdurchführung bereitgestellt. Im anderen Fall handelt es sich um eine sogenannte angepasste Durchführung.

Besonders bevorzugt sind die Glaszusammensetzungen AB1, AB2, AB3, AB4, AB5, AB7 und AB8 der Ausführungsbeispiele, die frei von Blei bis auf Verunreinigungen sind.

Als Materialien für den Grundkörper wird bevorzugt ein Leichtmetall wie Aluminium (Al), AlSiC, eine Aluminiumlegierung, Magnesium, eine Magnesiumlegierung, Titan, eine Titanlegierung verwandt. Alternative Materialien für den Grundkörper sind Metalle wie Stahl, rostfreier Stahl, Edelstahl oder Werkzeugstahl.

Unter Verschmelztemperatur bzw. Verschmelzungstemperatur des Glases oder der Glaskeramik wird diejenige Temperatur des Glases oder der Glaskeramik verstanden, bei der das Glasmaterial erweicht und so an dem mit dem Glasmaterial zu verschmelzenden Metall dicht anliegt, so dass eine Fügeverbindung zwischen dem Glas oder der Glaskeramik und dem Metall erhalten wird.

Die Verschmelztemperatur kann beispielsweise über die Halbkugeltemperatur wie in R. Görke, K.-J. Leers: Keram. Z. 48 (1996) 300-305 bzw. nach DIN 51730, ISO 540 oder CEN/TS 15404 und 15370-1 beschrieben, bestimmt werden. Die Messung der Halbkugeltemperatur ist ausführlich in der DE 10 2009 011 182 A1, erläutert.

Die aus der DE 10 2009 011 182 A1 bekannt gewordenen Glaslote betreffen Hochtemperaturanwendungen, z. B. bei Brennstoffzellen.

Die zuvor angegebenen Phosphatglaszusammensetzungen weisen einen Li-Anteil von bis zu 45 mol-%, insbesondere bis zu 35 mol-%, auf. Überraschenderweise sind diese Glaszusammensetzungen kristallisationsstabil, d.h. in einem nachgeschalteten Sinterschritt zeigen sie keine störende Kristallisation, insbesondere für weniger als 35 mol-% keine wesentliche Kristallisation.

Die zuvor genannten Glaszusammensetzungen weisen Li auf, das in die Glasstruktur eingebaut ist. Hierdurch eignen sich die Glaszusammensetzungen, insbesondere für Li-Ionen-Speichereinrichtungen, die Elektrolyten basierend auf Li, beispielsweise einer 1 M LiPF₆-Lösung umfassend eine 1:1 Mischung aus Ethylencarbonat und Dimethylcarbonat umfassen.

Besonders bevorzugt sind natriumarme bzw. natriumfreie Glaszusammensetzungen, da die Diffusion der Alkali-Ionen in der Reihenfolge Na+>K+>Cs+ erfolgt und daher natriumarme bzw. natriumfreie Gläser besonders beständig gegenüber Elektrolyten, insbesondere solchen, wie sie in Li-Ionen-Speichereinrichtungen verwandt werden, sind.

Die zuvor angegebenen Glaszusammensetzungen weisen eine thermische Ausdehnung a(20° C - 300° C) > 14 ·10⁻⁶/K, insbesondere zwischen 15 ·10⁻⁶/K und 25 · 10⁻⁶/K auf. Ein weiterer Vorteil der zuvor angegebenen Glaszusammensetzung ist darin zu sehen, dass eine Verschmelzung des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für AI-Verschmelzungen entgegen den bisherigen Verfahren nicht notwendig. Vielmehr kann eine derartige Verschmelzung auch unter Luft erfolgen. Für beide Arten der Verschmelzungen kann als Schutzgas N₂ oder Ar benutzt werden. Als Vorbehandlung zum Verschmelzen wird das Metall, insbesondere das Leichtmetall gereinigt und/oder geätzt, wenn nötig gezielt oxidiert oder beschichtet. Während des Prozesses werden Temperaturen zwischen 300° C und 600 °C mit Heizraten von 0.1 bis 30 K/min und mit Haltezeiten von 1 bis 60 min verwandt.

Des Weiteren ist, wie in den Fig. 1a und 1b dargestellt, ein Gehäuseteil 5 des Gehäuses, der Batterie beziehungsweise Batteriezelle, hier der Batteriedeckel, der die Öffnungen für die Durchführung der Elektroden aufweist, dargestellt. Der Batteriedeckel bzw. das Gehäuseteil ist ebenfalls bevorzugt aus Aluminium hergestellt. Als Material für den Batteriedeckel bzw. das Gehäuseteil kommen aber auch in Frage: Aluminiumlegierungen, Magnesium sowie Magnesiumlegierungen, AlSiC, Titan, Titanlegierungen, aber auch Stahl, rostfreier Stahl oder Edelstahl. Das Gehäuseteil weist eine Außenseite 20.1 und eine Innenseite 20.2 auf. Die Außenseite ist dadurch gekennzeichnet, dass sich von der Batteriezelle nach außen erstreckt, die Innenseite dadurch, dass sie sich zum Elektrolyten der Batteriezelle, beispielsweise bei einem Lithium-Ionen-Akkumulator hin erstreckt. Das gesamte Gehäuse mit Batteriezelle und Durchführungen ist in den Figuren 7a-11c dargestellt und dort näher erläutert.

Bei Lithium-Ionen-Batterien wird als Elektrolyt typischerweise ein nicht wässriger Elektrolyt, bestehend typischerweise aus einem Karbonat, insbesondere aus einer Karbonatmischung, beispielsweise einer Mischung aus Ethylenkarbonat und Dimethylkarbonat, verwandt, wobei die aggressiven, nicht wässrigen Batterieelektrolyten ein Leitsalz aufweisen, beispielsweise das Leitsalz LiPF₆ z. B. in Form einer 1-molaren Lösung.

Gemäß dem ersten Ausführungsbeispiel weist der Grundkörper 3 einen Überstand 30 auf, d.h. die Wandstärke W₁ des ringförmigen Körpers im Beispiel gemäß Fig. 1a auf der Außenseite des Gehäuseteils ist größer als die Dicke W₁ des ringförmigen Grundkörpers 9 im Bereich der Innenseite des Gehäuseteils, wodurch sich eine Anlage 32 des Grundkörpers auf der Außenseite des ringförmigen Körpers ergibt. Der ringförmige Körper 9 kann mit dem Gehäuseteil 5 im Bereich der Auflage 32 durch Laserstrahlschweißen, Elektronenstrahlschweißen, Löten, Einschrumpfen in die Öffnung 7 sowie Einpressen in die Öffnung 7 und Bördeln verbunden.

In Fig. 1b ist ein analoges Ausführungsbeispiel einer Durchführung zu Fig. 1a gezeigt, wobei gleiche Bezugsziffern für gleiche Bauteile verwandt werden.

Allerdings ist nunmehr die Breite W₁ im Bereich der Innenseite 20.2 größer als die Breite W₂ Bereich der Außenseite 20.1.

Ansonsten ist die Ausgestaltung gemäß Fig. 1b identisch zu Fig. 1a. Die Verbindung kann, wie bei Fig. 1a, zwischen Gehäuseteil 5, hier Batteriedeckel und Grundkörper 30 erfolgen, beispielsweise wie oben beschrieben, durch Laserstrahlschweißen, Elektronenstrahlenschweißen, Löten, Einschrumpfen oder Einpressen in die Öffnung 7.

Während es sich bei dem Grundkörper gemäß den Fig. 1a und 1b im Wesentlichen um einen Flanschring handelt, ist bei der Ausgestaltung gemäß der Fig. 2a bis 2b der ringförmige Grundkörper 109 ein ringförmiger Grundkörper mit einem Schweißring 170. Gleiche Bauteile wie in Fig. 1a und 1b sind mit um 100 erhöhten Bezugsziffern bezeichnet. Im Wesentlichen ist die Ausgestaltung gemäß den Fig. 2a bis 2b identisch zu den Ausgestaltungen gemäß Fig. 1a bis 1b. Der ringförmige Grundkörper 109 mit einem Schweißring 170 ermöglicht ein Verbinden Grundkörpers 109 mit dem Gehäuseteil durch alternative Verbindungsverfahren. Die Verbindung des ringförmigen Grundkörpers mit dem Gehäuseteil im Bereich des Schweißrings 170 kann durch Widerstandsschweißen oder Widerstandslöten erfolgen

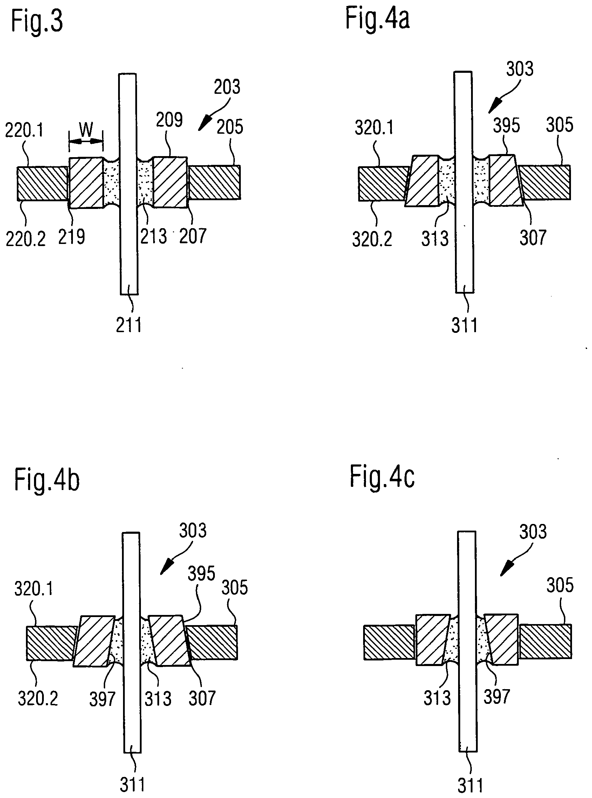

Fig. 3 zeigt eine weitere Ausgestaltung einer Durchführung mit einem Grundkörper. Gleiche Bauteile wie in den Fig. 1a bis 1b und 2a bis 2b sind mit jeweils um 200 gegenüber Fig. 1a und 1b bzw. 100 gemäß Fig. 2a bis 2b erhöhten Bezugsziffern gekennzeichnet.

Im Gegensatz zu den Ausgestaltungen gemäß den Figuren 1a bis 1b und 2a bis 2b weist der Grundkörper keine unterschiedlichen Weiten W1 und W2 auf, so dass ein Anschlag 32 ausgebildet wird, sondern die Weite W des ringförmigen Grundkörpers ist über die gesamte Höhe gleich. Der ringförmige Grundkörper 209 mit gleicher Weite über die gesamte Höhe wird in die Öffnung 207 eingebracht. Eine Verbindung zwischen dem Gehäuseteil 205 und der Durchführung 203, umfassend den ringförmigen Grundkörper 209 sowie das Glasmaterial 213 und den Abschnitt des im Wesentlichen stiftförmigen Leiter 211 wird durch Einsetzen in die Öffnung 207 und anschließendes Verbinden im Bereich der Seitenwände 219 der Öffnung 207 erreicht und nicht durch Verbinden. Die Erfindung kann durch Laserschweißen, Löten, Einschrumpfen, Einpressen oder Elektronenschweißen hergestellt werden.

Fig. 4a-4c zeigen alternative Ausgestaltungen einer Durchführung, die in eine Öffnung 307 im Gehäuseteil 305 eingebracht wird. Im Wesentlichen entspricht dies der Ausgestaltung gemäß Fig. 3, wobei für gleiche Bauteile eine um 100 erhöhte Bezugsziffern verwandt wurde. Im Unterschied zu Fig. 3 ist jedoch der Grundkörper 309 als konischer Ring ausgebildet, der in eine konisch verlaufende Öffnung 307 im Gehäuseteil eingelassen wird. Die Verbindung zwischen der Durchführung erfolgt wiederum zwischen den Seitenwänden der konischen Öffnung 307 und dem konischen Grundkörper 309, beispielsweise durch Schweißen, Löten, Einbördeln, Einschrumpfen. Es ist aber auch möglich, den im Wesentlichen konisch verlaufenden ringförmigen Grundkörper 309 in die konische Öffnung 307 im Gehäuseteil 305 einzupressen. Der konische Grundkörper kann die drei in Fig. 4a-4c dargestellten Ausgestaltungen aufweisen. In Fig. 4a ist der Grundkörper an der Außenseite 395 zum Gehäuseteil 305 konisch; in Fig. 4b sowohl an der Außenseite 395 wie an der zum stiftförmigen Leiter 311 eingerichteten Innenseite 397 und bei Fig. 4c nur an der Innenseite 397. Durch die konische Ausgestaltung sowohl der Öffnung als auch des Grundkörpers wird eine Relativbewegung der Durchführung in Richtung der Außenseite 320.1 des Gehäuseteils 305 vermieden, da die konische Bohrung und der konisch ausgestaltete Grundkörper quasi als Widerhaken fungieren und ei Relativbewegung in Richtung Außenseite 320.1 zu einem Formschluss zwischen Grundkörper 309 der Durchführung 303 und den Seitenwänden der Öffnung 307 führen.

Ein Vorteil der Ausgestaltung gemäß Fig. 4a-c besteht darin, dass auch unter erhöhten Belastungen die Durchführung zum Beispiel einer Druckbelastung, ein Herausdrücken der Durchführung 303 mit Metallstift 311 aus der Durchgangsöffnung 307 sicher vermieden wird. Besonders bevorzugt ist es, wenn die Öffnungen 307 durch eine einfache Herstellmethode, beispielsweise durch Stanzen, in das Gehäuseteil 305 eingebracht werden.

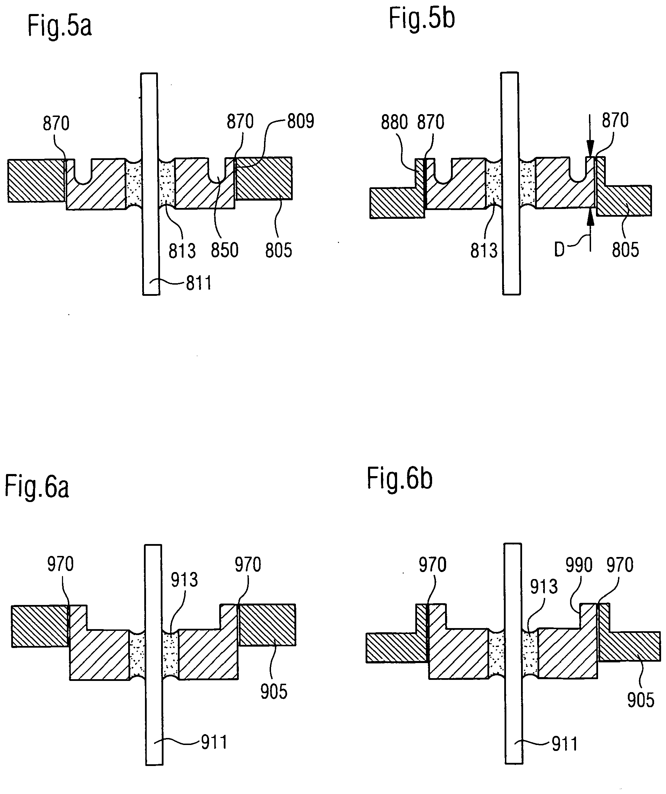

In den Fig. 5a-6b sind Ausführungsformen einer Durchführung eines stiftförmigen Leiters durch einen Grundkörper gezeigt, bei dem die Durchführung in das Gehäuseteil, insbesondere den Batteriedeckel mit einer thermischen Barriere und einer mechanischen Entlastung eingebracht ist.

In Fig. 5a und 5b ist eine erste Ausführungsform einer erfindungsgemäßen Durchführung mit Grundkörper und einer Entlastungseinrichtung zur mechanischen Entlastung und als thermische Barriere gezeigt.

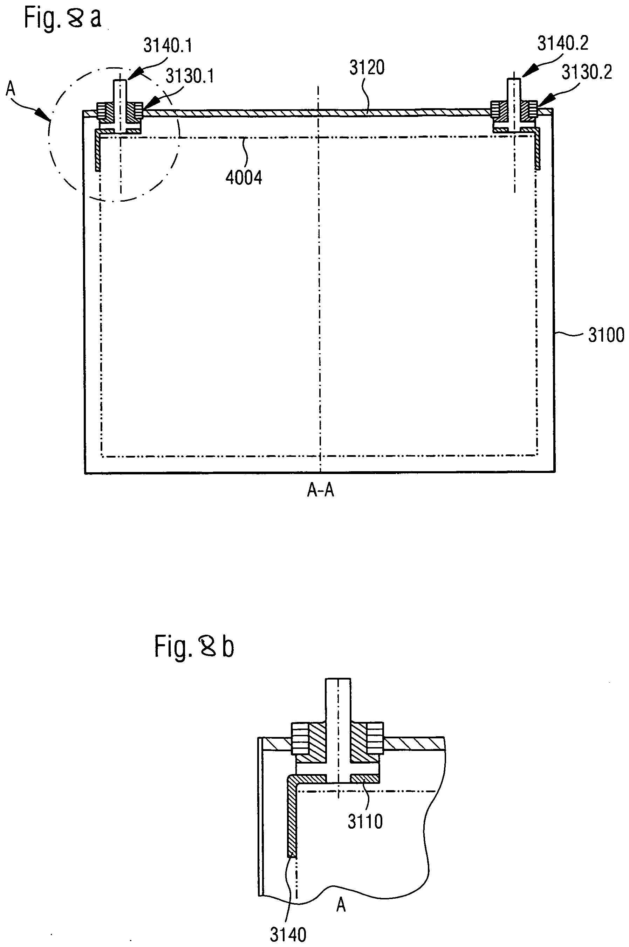

Im Gegensatz zu den Ausführungsformen gemäß Fig. 1a-4 umfasst bei der Ausführungsform gemäß Fig. 8a und 8b der Grundkörper 809 als Entlastungseinrichtung eine umlaufende Nut 850. Wiederum ist in dem Grundkörper 809 mit der umlaufenden Nut 850 ein im Wesentlichen stiftförmiger Leiter 811 mit einem Glas- oder Glaskeramikmaterial 813 eingeschmolzen.

Des Weiteren zu sehen ist in Fig. 5a auch ein Gehäuseteil 805, im Wesentlichen der Deckel der Batteriezelle. Die Durchführung, bestehend aus Grundkörper 809 mit eingeglastem, im Wesentlichen stiftförmigen Leiter, ist mit dem Gehäuseteil 805 umlaufend im Bereich 870, beispielsweise durch Schweißen, insbesondere Laserschweißen, verbunden. Die umlaufende Nut 850 stellt zum einen eine thermische Barriere dar, zum anderen stellt sie die erforderliche Elastizität zur Verfügung, um die Durchführung, insbesondere im Bereich der Einglasung 813, zu schützen beziehungsweise zu entlasten. Insbesondere wird mit Einbringen der umlaufenden Nut 850 erreicht, dass auftretende mechanische und thermische Belastungen, auf das Glas- bzw. Glaskeramikmaterial reduziert werden. Hierdurch können Rissbildungen im Glas- oder Glaskeramikmaterial der Durchführung, die zu Undichtigkeiten führen können, erheblich reduziert werden.

Die Ausgestaltung gemäß Fig. 5b zeigt wiederum eine Durchführung mit einer umlaufenden Nut 850 als Entlastungseinrichtung im Grundkörper. Im Gegensatz zur Ausgestaltung gemäß Fig. 5a weist hier das Gehäuseteil 805 im Bereich der Verbindung von Durchführung und Gehäuseteil 805 einen 880 auf. Dies führt gegenüber der Ausführungsform gemäß Fig. 5a zu einer noch besseren mechanischen Entlastung. Des Weiteren kann der Grundkörper über seine gesamte Dicke D mit dem Gehäuseteil 805 verbunden werden, was einen exakten Schweißprozess erlaubt.

Fig. 6a und 6b zeigen alternative Ausführungsformen zu den Fig. 5a und 5b, wobei auch bei den Fig. 6a und 6b eine Entlastung sowie eine thermische Barriere zur Verfügung gestellt wird. Im Gegensatz zu der Ausführung gemäß Fig. 5a weist der Grundkörper hier keine umlaufende Nut als Entlastungseinrichtung auf, sondern einen Überstand 990. Gleiche Bauteile wie in den Fig. 5a-5b sind mit um 100 gegenüber Fig. 5a und 5b erhöhten Bezugsziffern gekennzeichnet. Demgemäß ist der stiftförmige Leiter mit 911 bezeichnet und das Glas- und Glaskeramikmaterial mit 913. Der Bereich der Verbindung zwischen Durchführung und Gehäuseteil ist mit 970 bezeichnet. Die Vorteile zu Fig. 5a wie oben beschrieben, treffen auch auf Fig. 6a zu und werden hier mit eingeschlossen.

Fig. 6b zeigt eine alternative Ausführungsform zu Fig. 6a. Neben dem im Wesentlichen ringförmigen Grundkörper 909 weist nunmehr auch das Deckelteil 905 einen Überstand 980 auf. Die Vorteile zu Fig. 5b, wie oben beschrieben, treffen auch auf Fig. 6b zu und werden hier mit eingeschlossen.

In den Figuren 7a-8b sind komplette Batteriezellen für eine Lithium-Ionen-Batterie dargestellt, mit eingesetzten Durchführungen , wobei ein ElektrodenVerbindungsbauteil mit einem Leiter verbunden ist, d.h. es liegt eine zweiteilige Ausführungsform vor, bei der im Wesentlichen stiftförmige Leiter mit einem Elektrodenverbindungsbauteil verbunden werden muss, was bei einer einstückigen Ausgestaltung, bei der der Leiter gleichzeitig das Elektrodenverbindungsbauteil gemäß der Erfindung, wie in den Fig. 9a-11c dargestellt ist, vermieden wird..

Die Figuren 7a-7b zeigen eine Batteriezelle, bei der der Leiter kein Kopfteil aufweist. Die Figuren 8a bis 8b zeigen eine Batteriezelle mit einem Gehäuse und darin eingebauten Durchführungen, wobei der Leiter ein Kopfteil aufweist. In beiden Fällen ist das Elektrodenverbindungsbauteil ein separates Bauteil, das mit dem Leiter, insbesondere dem im Wesentlichen stiftförmigen Leiter, z. B. durch Verschweißen, verbunden werden muss. Dies ist aufwendig und benötigt insbesondere auch Bauraum in der Batteriezelle, wie in Fig. 7a bis 7b zu erkennen ist.

In Figur 7a ist der prinzipielle Aufbau einer Batteriezelle 1000 dargestellt.

Die Batteriezelle 1000 weist ein Gehäuse 1100 mit Seitenwänden 1110 und einem Deckelteil 1120 auf. In das Deckelteil 1120 des Gehäuses 1100 sind Öffnungen 1130.1, 1130.2 eingelassen beispielsweise durch Stanzen. In die beiden Öffnungen 1130.1, 1130.2 sind wiederum Durchführungen 1140, 1140.2 eingesetzt.

Detailliert zeigt Figur 7b den Ausschnitt des Batteriedeckels 1120 mit der Öffnung 1130.1, und darin eingesetzter Durchführung 1140.1.

Die Durchführung 1140.1 umfasst einen stiftförmigen Leiter 2003 sowie einen Grundkörper 2200. Der stiftförmige Leiter 2003 ohne ein Kopfteil ist in den Grundkörper 2200 mit einem Glas- oder Glaskeramikmaterial 2280 eingeglast. Der stiftförmige Leiter 2003 wird nach Einglasen in den Grundkörper 2200 mit Glas- oder Glaskeramikmaterial 2280 als gesamtes Bauteil in die Öffnung 1130.1 eingesetzt, beispielsweise indem der Grundkörper 2200 der Durchführung, der bevorzugt aus Aluminium besteht, mit dem aus Aluminium bestehenden kaltverfestigten Deckelteil 1120, z. B. durch Schweißen verbunden wird. Aufgrund der Einglasung ist bevorzugt nur der Grundkörper 2200 erweicht.

Am stiftförmigen Leiter ist eine Ausnehmung 2002 vorgesehen, in die ein Elektrodenverbindungsteil 2020 eingesetzt ist. Das Elektrodenverbindungsteil wiederum dient entweder als Kathode oder als Anode der elektrochemischen Zelle 2004 der Batteriezelle 1000. Das Gehäuse 1100, das die Batteriezelle 1000 umgibt als Batteriezellengehäuse. Elektrodenverbindungsbauteil und Leiter sind somit zwei separate Bauteile, die miteinander verbunden werden müssen.

Wie aus Fig. 7a hervorgeht, ist aufgrund der Bauweise der Durchführung 1140.1, 1140.2 mit einem stiftförmigen Leiter und einem in einer Ausnehmung 2002 des stiftförmigen Leiters eingesetztes Elektrodenverbindungsbauteil, das mit der elektrochemischen Zelle 2004 verbunden wird, ein großer Bauraum 2006, der zwischen der elektrochemische Zelle 2004 und dem Deckel 1120 gebildet wird, verbunden.

Um den nicht ausgenutzten Bauraum in dem Batteriezellengehäuse zu minimieren, kann man eine zweiteilige Ausführungsform gemäß den Fig. 8a-8b vorsehen, dass der Leiter ein Kopfteil umfasst, mit dem das ElektrodenVerbindungsbauteil, z. B. durch Schweißen, verbunden ist. Obwohl durch eine derartige Ausgestaltung Bauraum gewonnen werden kann, ergibt sich aufgrund der Mehrteiligkeit immer noch ein hoher Fertigungsaufwand.

Gleiche Bauteile wie in Fig. 7a und 7b mit um 2000 erhöhten Bezugsziffern gekennzeichnet.

Wiederum sind in die Öffnung 3130.1, 3130.2 des Deckels 3120 des Batteriezellengehäuses 3100 Durchführungen 3140.1, 3140.2 eingesetzt. Im Gegensatz zum Durchführungsbauteil der Durchführungen gemäß Fig. 7a und 7b ist nunmehr das Durchführungsbauteil mit einem stiftförmigen Leiter 3003 sowie einem Kopfteil 3005 versehen. Das Kopfteil weist einen Fortsatz 3030 auf sowie ein auf dem Kopfteil 3005 durch eine Schweiß-, Löt-, oder sonstiges der zuvor beschriebenen Verfahren fest angebrachtes Elektrodenverbindungsbauteil 3010. Das Elektrodenverbindungsbauteil weist einen Abschnitt 3140 auf, wobei der Abschnitt 3140 als Kathode beziehungsweise Anode für die elektrochemische Zelle 4004 dient. Wie aus den Fig. 8a bis 8b hervorgeht, ist deutlich der Vorteil des erfindungsgemäßen Durchführungsbauteils zu erkennen. Die in Fig. 8a bis 8b gezeigte Bauart der Durchführung bedingt, dass möglichst wenig Bauraum innerhalb des Batteriezellengehäuses, ungenutzt bleibt.

In den Fig. 9a bis 9c ist eine erfindungsgemäße Ausgestaltung eines Teiles eines Batteriegehäuses mit Durchführung gezeigt. Gleiche Bauteile wie in den vorangegangenen Figuren werden mit um 5000 erhöhten Bezugsziffern gekennzeichnet.

Die in den Figuren 9a bis 9c gezeigten Ausführungsbeispiele zeichnen sich dadurch aus, dass die Leiter, im Wesentlichen die stiftförmigen Leiter 7003.1, 7003.2, 7003.3 am zur Batteriezelle hin gerichteten Ende keine runde Form, d.h. keinen runden Querschnitt wie z. B. in den Figuren 7a - 8b aufweisen, sondern einen im Wesentlichen rechteckigen Querschnitt 7100. Der rechteckige Querschnitt 7100 dient dabei als Elektroden-Verbindungsteil, der mit der Anode und/oder Kathode verbindbar ist. Im Gegensatz zu den Ausgestaltungen gemäß den Figuren 7a bis 8b ist es nicht notwendig, ein separates Elektroden-Verbindungsteil mit dem durch die Durchführung hindurchgeführten Leiter, insbesondere in Stiftform, zu verbinden, sondern der Leiter 7003.1, 7003.2, 7003.3 ist erfindungsgemäß einstückig mit einem ersten Abschnitt 8005.1, 8005.2, 8005.3 im Bereich der Durchführung 8140.1, 8140.2, 8140.3 und der Einglasung 7280 sowie einem zweiten Abschnitt 8110.1, 8110.2, 8110.3 mit der als Anode oder Kathode dient bzw. mit der Anode bzw. Kathode der elektrochemischen Zelle (nicht gezeigt) verbindbar ist. Des Weiteren weist jeder der Leiter 7003.1, 7003.2, 7003.3 zwei Abknickungen 7200, 7300 auf. Im Prinzip bildet der Leiter 7003.1, 7003.2, 7003.3 bei seinem zur Batteriezelle hin gerichteten Ende bereits den Abschnitt 8110.1, 8110.2, 8110.3 aus, der als Kathode bzw. Anode für die elektrochemische Zelle (nicht gezeigt) dient bzw. mit der Kathode bzw. Anode verbindbar ist. Im Gegensatz zur Ausführungsform gemäß Figur 8a und 8b, bei der an den Leiter, insbesondere den im Wesentlichen stiftförmigen Leiter, ein separates Elektrodenverbindungsbauteil (mit 3110 in Fig. 8b bezeichnet) angebracht ist, beispielsweise durch Schweißen, ist das Elektrodenverbindungsbauteil und der im Wesentlichen stiftförmige Leiter in den Ausführungsbeispielen gemäß der Figuren 9a bis 9c einteilig ausgebildet. Dies ist unter Fertigungsgesichtspunkten vorteilhaft, da keine zwei Teile verbunden werden müssen. Die Ausführungsformen 7003.1, 7003.2, 7003.3 unterscheiden sich im Wesentlichen durch die Querschnittsform des Leiters im Bereich der Durchführung 8140.1, 8140.2, 8140.3. Bei der Ausgestaltung gemäß Fig. 9a ist der Querschnitt des Leiters im Bereich der Einglasung 7280 in ein Glas oder ein Glasmaterial ebenfalls im Wesentlichen rechteckig.

Bei der Ausgestaltung gemäß Fig. 9b ist anstelle des rechteckigen Querschnittes im Bereich der Einglasung 7280 der Querschnitt rund. Diese Ausgestaltung ist besonders bevorzugt, da durch den runden Querschnitt im Bereich der Durchführung bzw. Einglasung 7280 eine einfache zuverlässige Einglasung bei möglichst geringem Fertigungsaufwand ermöglicht wird. Dieser Leiter mit rundem Querschnitt ist mit der Bezugsziffer 7003.2 gekennzeichnet. Der Leiter weist bei der Ausführungsform gemäß Figur 9b auch bei der zur Außenseite der Batteriezelle hin einen runden Querschnitt auf im Gegensatz zur Ausführungsform gemäß Fig. 9a.

Bei der Ausgestaltung gemäß Fig. 9c ist im Bereich der Einglasung 7280 der Querschnitt ebenfalls rund wie in Fig. 9b, jedoch ist der Leiter 7003.3 im Bereich des Anschlusses an der Außenseite des Batteriegehäuses gequetscht und daher im Querschnitt rechteckig, bevorzugt quadratisch.

In sämtlichen Figuren 9a bis 9c sind der Deckel des Batteriegehäuses mit 8120, der Grundkörper, in den der Leiter 7003.1, 7003.2, 7003.3 eingeglast ist, mit 8130 bezeichnet. Nachteilig an den einteiligen Ausgestaltungen gemäß den Figuren 9a bis 9c ist, dass die Leiter im Wesentlichen gerade in das Batteriezelleninnere verlaufen. Dies benötigt zum einen Bauraum, zum anderen ist es schwierig, bei unverändertem Batteriedeckel mit Öffnungen den Abstand der Elektroden einzustellen bzw. an unterschiedlich Batteriezellen anzupassen.

In den Figuren 10a bis 10e ist eine vierte Ausgestaltung einer Durchführung für eine Batteriezelle in einer einteiligen Ausführungsform dargestellt. Wie schon bei den Ausführungsformen gemäß den Figuren 8a bis 9c weist der Leiter an dem zur Batteriezelle hin gerichteten Ende keine runde Form, d.h. keinen runden Querschnitt, wie z. B. in den Figuren 7a bis 8b, auf, sondern einen im Wesentlichen rechteckigen Querschnitt, so dass der Leiter an seinem zur Batteriezelle hin gerichteten Ende bereits den Abschnitt 9110 ausbildet, der mit der Kathode bzw. Anode verbindbar ist. Leiter 9003.1, 9003.2 und Elektrodenverbindungsbauteil 9110 sind in diesem Ausführungsbeispiel, wie schon bei den vorangegangenen Figuren 8a bis 9c, einteilig ausgebildet. Gegenüber den Ausgestaltungen, wie in den Figuren 8a bis 9c gezeigt, insbesondere gegenüber den Ausgestaltungen gemäß Fig. 9a bis 9c, weist die Ausgestaltung gemäß Figur 10a bis 10e die Möglichkeit auf, den Elektrodenabstand einzustellen und gleichzeitig die Lage der Öffnungen in dem Batteriezellendeckel beizubehalten. Gleiche Bauteile wie in den Figuren 9a bis 9c sind mit um 1000 bzw. 2000 erhöhten Bezugsziffern gekennzeichnet.

Figur 10a zeigt in einer dreidimensionalen Ansicht einen Deckel 9120 eines Batteriegehäuses mit zwei erfindungsgemäßen Durchführungen. Der Batteriedeckel 9120 umfasst zwei Öffnungen 9007.1, 9007.2, durch die ein erfindungsgemäßer Leiter 9003.1, 9003.2 durchgeführt ist. Die Leiter 9003.1, 9003.2 weisen zwei Abschnitte auf, einen ersten Abschnitt 9005.1, 9005.2, der einen runden, insbesondere einen kreisrunden Querschnitt aufweist sowie einen zweiten Abschnitt 9009.1, 9009.2 mit im Wesentlichen rechteckigem Querschnitt 9100. Der zweite Abschnitt 9009.1, 9009.2 des Leiters mit im Wesentlichen rechteckigen Querschnitt entsteht insbesondere durch Quetschung und kann direkt als Kathode bzw. Anode für die elektrochemische Zelle (nicht gezeigt) dienen bzw. mit der Kathode bzw. Anode der elektrochemischen Zelle verbunden werden, z. B. durch Verschweißen. Der im Wesentlichen rechteckige Leiterquerschnitt 9100 stimmt in seiner Fläche bevorzugt mit der Fläche des kreisrunden Querschnittes des Leiters im ersten Bereich 9005.1 überein, so dass Leitungsverluste aufgrund von Leiterquerschnittsänderungen sicher vermieden werden. Insbesondere wird hierdurch eine unzulässige Erwärmung der Batteriezelle vermieden.

Der erste Abschnitt des Leiters 9005.1, 9005.2 weist einen im Wesentlichen kreisrunden Querschnitt auf, insbesondere im Bereich der Einglasung in ein Glas- bzw. Glaskeramikmaterial. Um möglichst wenig Bauraum zu verlieren wird bei den Ausgestaltungen gemäß Fig. 10a bis 11c die Einglasung direkt in die Öffnungen 9007.1, 9007.2 vorgenommen. Wird als Material für das Gehäuse beziehungsweise den Batteriedeckel beispielsweise Aluminium oder eine Aluminiumlegierung verwandt, so werden die Glasmaterialien entsprechend mit niedrigen Verschmelztemperaturen, insbesondere im Bereich 250°C bis 650°C eingesetzt.

Im Gegensatz zu der Ausführungsform gemäß den Figuren 9a bis 9c weist der zweite Abschnitt 9009.1, 9009.2 des Leiters zwei Bereiche auf, einen Bereich 9022.1, 9022.2, der als Anode und/oder Kathode der elektrochemischen Zelle dienen kann oder mit Anode und/oder Kathode verbindbar ist sowie einen weiteren Bereich 9020.1, 9020.2, der im Wesentlichen horizontal verläuft und senkrecht zum ersten Abschnitt 9005.1, 9005.2 und/oder zum Bereich 9022.1, 9022.2 ist. Durch die Wahl des Bereichs 9020.1, 9020.2 kann der Elektrodenabstand bei gleichbleibender Öffnung des Batteriedeckels leicht eingestellt werden. Bei der Ausgestaltung gemäß den Figuren 10a bis 10e ist der Querschnitt, wie im Bereich der Durchführung durch den Batteriedeckel, kreisrund.

In Figur 10b ist eine Schnittansicht durch einen Batteriedeckel gezeigt. Gut zu erkennen ist wiederum der Leiter 9003.1, 9003.2 mit seinen beiden Abschnitten, einem ersten Abschnitt 9005.1, 9005.2 mit kreisrundem Querschnitt im Bereich der Durchführung durch das Glas- oder Glaskeramikmaterial und einem zweiten Abschnitt 9009.1, 9009.2 mit rechteckigem Querschnitt im Inneren der Batteriezelle, der als Kathode bzw. Anode dienen kann und/oder mit einer Kathode oder Anode verbindbar ist. Bei einer Verbindung mit den Batteriezellenanschlüssen im Bereich des zweiten Abschnittes kann eine Ultraschall-, Widerstands- oder Laserschweißung eingesetzt werden.

Deutlich zu erkennen ist der weitere Bereich des zweiten Abschnittes, der im Querschnitt gleich zum ersten Abschnitt ist, nämlich kreisrund. Aufgrund des kreisrunden Querschnitts geht relativ viel Bauraum verloren. Der Bauraumverlust kann ausgedrückt werden in der Höhe H in Figur 10b, die bevorzugt im Bereich 5mm bis mehr als 8 mm liegt. Der Abstand A des weiteren Bereiches, der im Wesentlichen horizontal verläuft, zum Batteriedeckel beträgt bevorzugt 1 mm bis 2 mm. Um Kurzschlüsse zu verhindern, kann vorgesehen sein, dass der weitere Bereich 9020.1, 9020.2 des Leiters ein Isoliermaterial umfasst.

Figur 10c zeigt eine Draufsicht auf den Batteriedeckel 9120. Bei der Draufsicht auf den Batteriedeckel ist deutlich zu erkennen die Öffnungen 9007.1, 9007.2, in die der erste Abschnitt 9005.1, 9005.2 des Leiters 9003.1, 9003.2 mit im Wesentlichen kreisrundem Querschnitt direkt eingeglast ist. Das Glas- und/oder Glaskeramikmaterial ist mit 9200 bezeichnet. Durch den kreisrunden Querschnitt im Bereich der Einglasung wird eine einfache und zuverlässige Eingalsung erreicht.

Bei der Draufsicht in Figur 10c gut zu erkennen ist auch der rechteckige Leiterquerschnitt 9100 im Bereich des zweiten Abschnittes sowie den senkrecht verlaufenden weiteren Bereich 9020.1, 9020.2 im zweiten Abschnitt des Leiters.

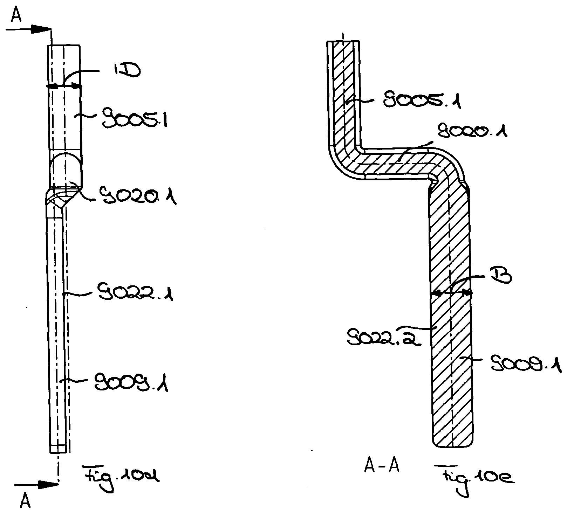

In den Figuren 10d und 10e ist nochmals detailliert der Leiter dargestellt. Hierbei zeigt Figur 10d eine Draufsicht von vorne auf den Leiter und Figur 10e einen Schnitt entlang der Linie A-A in Figur 10d. Deutlich zu erkennen sind in Figur 10d und 10e der erste Abschnitt mit im Wesentlichem kreisrundem Querschnitt 9005.1, 9005.2 mit Durchmesser ID im Bereich der Durchführung und der zweite Abschnitt mit im Wesentlichen rechteckigem Querschnitt im Inneren der Batteriezelle, der mit einer Kathode und/oder Anode verbindbar ist. Der zweite Abschnitt 9009.1, 9005.2 geht durch Quetschung, d.h. Umformung aus einem Leiter mit kreisrundem Querschnitt, hervor unter Beibehaltung der Querschnittsfläche. Da sich der Leiterquerschnitt nicht ändert, können Wärmeverluste vermieden werden.

In Figur 10e ist deutlich der Unterschied zwischen dem ersten Abschnitt mit kreisrundem Querschnitt und dem zweiten Abschnitt mit rechteckigem Querschnitt zu erkennen. Deutlich zu erkennen ist in Figur 10e die flache Elektrodenform im zweiten Abschnitt 9009.1. Der weitere Bereich im zweiten Abschnitt, der im Wesentlichen senkrecht zum ersten Abschnitt verläuft, ist mit 9020.1 gekennzeichnet und weist wiederum einen im Wesentlichen kreisrunden Querschnitt auf.

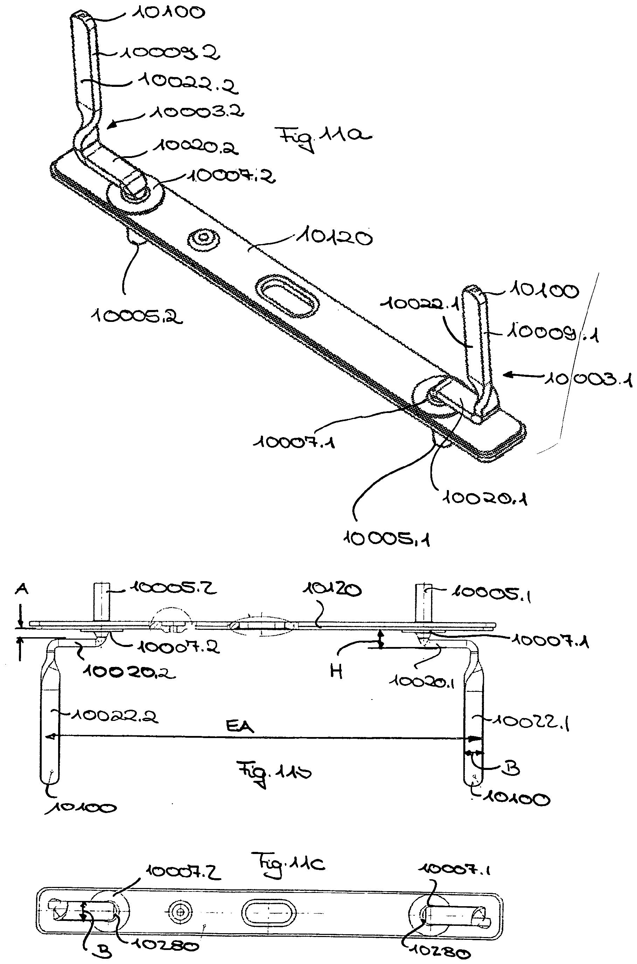

In den Figuren 11a bis 11e ist eine nochmals verbesserte Ausführungsform gegenüber der Ausgestaltung, wie in den Figuren 10a bis 10e gezeigt, dargestellt. Die Ausgestaltung gemäß den Figuren 11a bis 11e stimmt im Wesentlichen mit den Ausführungen in den Figuren 10a bis 10d überein, allerdings zeichnet sie sich dadurch aus, dass Anpassbarkeit der Elektroden an unterschiedliche Batteriezellenkonfigurationen bei gleichzeitig nur sehr geringem Bauraumverlust realisiert wird.

Gleiche Bauteile wie in Fig. 10a bis 10d sind mit um 1000 erhöhten Bezugsziffern gekennzeichnet. Der geringe Bauraum wird im zweiten Abschnitt 10009.1, 10009.2 in dem weiteren Bereich 10020.1, 10020.2, in dem der Leiter im Wesentlichen parallel zum Batteriezellengehäuse bzw. senkrecht zum ersten Abschnitt 10005.1, 10005.2 verläuft, nicht, wie in der Ausgestaltung gemäß der Figuren 10a bis 10e, mit kreisrundem Querschnitt ausgestaltet ist, sondern einen rechteckigen Querschnitt umfasst, der im Wesentlichen mit dem rechteckigen Querschnitt des Bereiches des zweiten Abschnittes übereinstimmt, der an eine Kathode und/oder Anode anschließbar ist.

Figur 11a zeigt wie Figur 10a eine dreidimensionale Ansicht eines Batteriedeckels 10120 mit Leitern 10003.1, 10003.2, die durch Öffnungen in einem Grundkörper 10007.1, 10007.2 durch den Batteriedeckel hindurchgeführt werden. Der erste Abschnitt 10005.1, 10005.2 des Leiters weist, wie schon in der Ausführungsform gemäß Figur 10a, einen kreisrunden Querschnitt auf, der in einem Glas bzw. Glasmaterial direkt in die Öffnungen 10007.1, 10007.2 eingeglast ist. Der zweite Abschnitt 10009.1, 10009.2 des Leiters weist einen rechteckigen Querschnitt 10100 auf. Im Gegensatz zu Figur 10a bis 10c ist der rechteckige Querschnitt über den gesamten zweiten Abschnitt 10009.1, 10009.2 verwirklicht, d.h. in dem Bereich 10022.1, 10022.2, der mit der Anode und/oder Kathode verbindbar ist, wie auch in dem weiteren Bereich der im Wesentlichen parallel zum Batteriedeckel 10120 verläuft und mit 10020.1, 10020.2 gekennzeichnet ist.

Wie aus Figur 11b deutlich hervorgeht, in der dieselben Bezugsziffern wie in Figur 11a verwandt werden, wird durch die Ausgestaltung des weiteren Bereiches 10020.1, 10020.2 mit einem rechteckigen Querschnitt die Höhe H, die durch den Leiter verloren geht, erheblich verringert, und zwar gegenüber der Ausführungsform, wie in den Figuren 10a bis 10c gezeigt und etwa ein Drittel auf jetzt eine Höhe von H = 3 mm bis 5 mm, bevorzugt 4 mm. Wie schon bei der Ausgestaltung gemäß Figur 10a bis 10c kann vorgesehen sein, um Kurzschlüsse zwischen dem Batteriedeckel und dem weiteren Bereich des Leiters zu vermeiden, dass dieser mit einem Isoliermaterial versehen ist.

Der Leiter kann bei der Ausgestaltung gemäß Figur 10a bis 10e und insbesondere bei der Ausgestaltung gemäß den Figuren 11a bis 11e insbesondere aus einem Strangmaterial mit im Wesentlichen kreisförmigen Querschnitt durch einfachstes Umformen, d.h. eine spanlose Formgebung, in großen Stückzahlen kostengünstig hergestellt werden. Des Weiteren ermöglicht die Ausgestaltung gemäß den Figuren 11a bis 11e einen sehr platzsparenden Übergang von einem runden Querschnitt im Bereich der Durchführung auf einen flachen Querschnitt im Bereich der Kathode bzw. Anode bzw. der Bereiche, die mit Kathode oder Anode verbindbar ist.

Durch die Möglichkeit, die Länge des weiteren Bereiches 10020.1, 10020.2 im Umformschritt frei wählen zu können, ermöglicht es, den Elektrodenabstand EA anzupassen an die jeweilige Batteriezelle. Die Kathode bzw. Anode bzw. die Verbindung des zweiten Abschnittes des Leiters mit der Kathode bzw. Anode erfolgt mit Hilfe von Schweißen, beispielsweise Ultraschall-Widerstandsschweißen oder Laserschweißen.

In Figur 11c ist eine Draufsicht auf einen Batteriedeckel gemäß Figur 11a mit angebrachten Leitern gezeigt. Gleiche Bauteile sind wiederum mit denselben Bezugsziffern belegt. Die Leiter sind in die Öffnungen im Batteriedeckel direkt eingeglast.

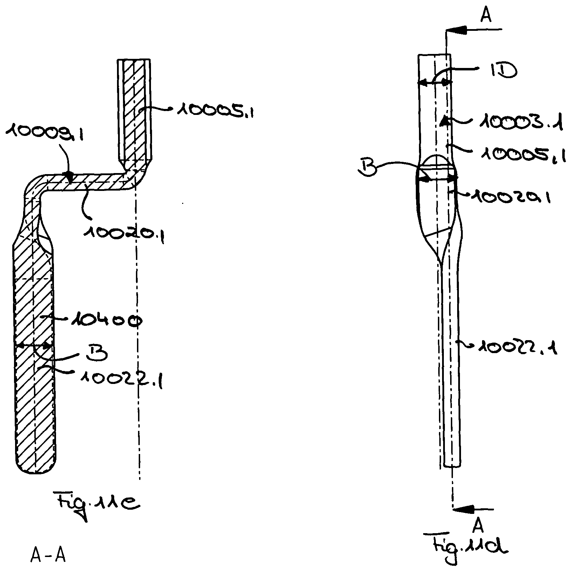

Die Figuren 11d und 11e zeigen nochmals den erfindungsgemäßen Leiter in einer detallierten Ansicht.

In Figur 11d ist eine Vorderansicht der Elektrode gezeigt, in Figur 11e der Schnitt A-A gemäß Figur 11d. Wie aus Figur 11d hervorgeht, wird der erste Abschnitt 10005.1 mit kreisförmigem Querschnitt mit dem Durchmesser ID durch Umformen bzw. spanloses Bearbeiten in einen zweiten Abschnitt 10009.1 mit rechteckigem Querschnitt überführt. Hierbei wird ein durchgehend gleichbleibender Leitungsquerschnitt der Leiter gewährleistet. Dadurch, dass der Leiterquerschnitt über den gesamten Leiter im Wesentlichen gleich bleibt, tritt keine Verlustwärme über der gesamten Leitungsstrecke auf. Um ein Verbiegen, insbesondere des weiteren Bereichs 10020.1 zu verhindern, ist vorgesehen, eine Versteifungsprägung an der flachen Elektrodenform vorzusehen. Bei einer Breite B von beispielsweise 5mm im Bereich der flachen Elektrodenform erfolgt beispielsweise eine 1mm bis 2mm breite und 0,5mm tiefe Einprägung. Da durch die Versteifungsprägung das Verbiegen verhindert wird, kann ein Kurzschluss im Bereich des weiteren Bereiches 10020.1 zum Batteriezellengehäuse hin sicher vermieden werden. Der Bereich 10022.1, der mit der Kathode und/oder Anode verbindbar ist bzw. diese darstellt, kann flexibel gestaltet werden, im Gegensatz zu einer runden Elektrodenform. Die eckige Elektrodenform 10400 stellt eine flexibel gestaltbare Verbindungszone dar, die an die jeweilige Lage der Batteriezellenanschlüsse angepasst werden kann und so eine einfache Verbindbarkeit der Batteriezellenanschlüsse mit der Elektrode ermöglicht. Der Verbindungsbereich ist ausreichend groß ausgebildet, trotz einer variabel wählbaren Breite B, die an die jeweilige Batteriezelle angepasst werden kann, wie in Figur 11d dargestellt. Als Elektrodenmaterial, d.h. als Material für die Leiter, finden bevorzugt Metalle, insbesondere Kupfer oder Aluminium oder deren Legierung Verwendung.

Mit der vorliegenden Erfindung wird erstmals eine Durchführung für ein Gehäuse, insbesondere ein Batteriezellengehäuse , bevorzugt für eine Lithium-Ionen-Batterie, angegeben, die vorfertigbar ist und besonders dafür geeignet ist, in Gehäuseteile von Batteriezellengehäusen eingesetzt zu werden. Das Batteriezellengehäuse umfasst bevorzugt ein Leichtmetall wie Aluminium (AI), eine Aluminiumlegierung, AlSiC, Magnesium, eine Magnesiumlegierung, Titan oder eine Titanlegierung. Es sind aber als Materialien für das Batteriezellengehäuse auch Metalle wie Stahl oder Edelstahl, insbesondere nicht rostender Stahl oder Werkzeugstahl möglich. In einem solchen Fall werden die Materialien des Grundkörpers und/oder des im Wesentlichen stiftförmigen Leiters angepasst.

Die erfindungsgemäße Lösung ermöglicht es des Weiteren, auf ein kostengünstiges Herstellungsverfahren und Ausgangsmaterialien zurückzugreifen.

In einer ersten Ausgestaltung kann die gesamte Durchführung als vorgefertigtes Bauteil ausgebildet sein, in welches der Metallstift mittels eines Fixiermaterials, d.h. beispielsweise eines Glaspfropfens, in einen Grundkörper eingeschmolzen wird, bevor dieser in das Gehäuseteil eingesetzt wird. Hierdurch wird sichergestellt, dass es zu keinem Verlust der Kaltverfestigung des Gehäusebauteiles kommt. Des Weiteren können Materialstärken und Materialien von Gehäusebauteil und Grundkörper unabhängig gewählt werden. Durch spezielle Ausgestaltungen mit einer Entlastungseinrichtung kann die Durchführung sowohl mechanisch wie thermisch entlastet werden.

Alternativ hierzu kann eine direkte Einglasung erfolgen, die Bauraum spart. Bei einer direkten Einglasung muss das Glasmaterial eine Verschmelztemperatur aufweisen, die an das Gehäusematerial angepasst ist, wobei das Gehäusematerial derart gewählt wird, dass es eine ausreichende Festigkeit aufweist.

Mit der Erfindung können die Elektrodenabstände einfach an unterschiedliche Batteriezellen angepasst werden.

Des Weiteren ist durch den gleichbleibenden Leitungsquerschnitt im Bereich der Durchführung und des Elektrodenanschlussbereiches der Leitungsverlust minimiert und damit auch der Wärmeverlust.

Durch den runden Querschnitt des Leiters im Bereich der Einglasung wird eine zuverläsige Einglasung zur Verfügung gestellt.

## Patentansprüche

1. Durchführung, umfassend wenigstens einen Leiter mit einem Querschnitt (ID) in einem Glas- oder Glaskeramikmaterial (7280) zum Einbringen in eine in einem Gehäuseteil eines Gehäuses ausgebildete Öffnung (9007.1, 9007.2, 10007.1, 10007.2)
**dadurch gekennzeichnet, dass**
der Leiter (7003.1, 7003.2, 7003.2, 9003.1, 9003.2, 10003.1, 10003.2) wenigstens zwei Abschnitte aufweist, einen ersten Abschnitt (9005.1, 9005.2, 10005.1, 10005.2) mit einem ersten, im Wesentlichen runden, insbesondere kreisrunden Querschnitt mit einem Durchmesser ID, wobei der erste Abschnitt (9005.1, 9005.2, 10005.1, 10005.2) des Leiters in der Durchführung in ein Glas- oder Glaskeramikmaterial (7280) eingeglast ist, und einem zweiten Abschnitt (9009.1, 9009.2, 10009.1, 1009.2) mit einem zweiten, nicht runden, insbesondere einem im Wesentlichen rechteckigen Querschnitt (9100), wobei der Leiter mit erstem und zweitem Abschnitt einstückig ist, wobei
der im Wesentlichen rechteckige Querschnitt des zweiten Abschnittes des Leiters in seiner Fläche im Wesentlichen mit der Fläche des im Wesentlichen runden Querschnittes des ersten Abschnittes des Leiters übereinstimmt.

2. Durchführung nach Anspruch 1,
**dadurch gekennzeichnet, dass**
das Gehäuseteil des Gehäuses ein Metall, insbesondere ein Leichtmetall, bevorzugt Aluminium, eine Aluminiumlegierung, AlSiC, Magnesium, eine Magnesiumlegierung, Titan, eine Titanlegierung, Stahl, rostfreien Stahl oder Edelstahl umfasst.

3. Durchführung nach Anspruch 1 oder 2,
**dadurch gekennzeichnet, dass**
der zweite Abschnitt (9009.1, 9009.2, 10009.1, 10009.2) wenigstens zwei Abknickungen (7200, 7300) umfasst und/oder
der zweite Abschnitt einen Bereich (9022.1, 9022.2, 10022.1, 10022.2) umfasst, der mit Anode und/oder Kathode verbindbar ist.

4. Durchführung nach einem der Ansprüche 1 bis 3,
**dadurch gekennzeichnet, dass**
der zweite Abschnitt (9009.1, 9009.2, 10009.1, 10009.2) einen weiteren Bereich (9020.1, 9020.2, 10020.1, 10020.2) umfasst, der im Wesentlichen horizontal und parallel zu einem Deckel verläuft und senkrecht auf dem ersten Abschnitt und/oder dem Bereich steht, der mit Anode und/oder Kathode verbindbar ist.

5. Durchführung nach einem der Ansprüche 1 bis 4,
**dadurch gekennzeichnet, dass**
der zweite Abschnitt eine Versteifung, insbesondere ein U-Profil, bevorzugt im weiteren Bereich (9020.1, 9020.2, 10020.1, 10020.2) umfasst.

6. Durchführung nach einem der Ansprüche 1 bis 5,
**dadurch gekennzeichnet, dass**
der Leiter als Material insbesondere ein Metall, bevorzugt Kupfer, CuSiC, eine Kupferlegierung, Aluminium, AlSiC, oder eine Aluminiumlegierung, Magnesium oder eine Magnesiumlegierung, NiFe, einen NiFe-Mantel mit Kupferinnenteil, Silber, eine Silberlegierung, Gold, eine Goldlegierung sowie eine Kobalt-Eisen-Legierung umfasst und/oder der Leiter, insbesondere der stiftförmige Leiter im Bereich der Öffnung (9007.1, 9007.2, 10007.1, 10007.2) in ein Glas- oder Glaskeramikmaterial eingebracht ist.

7. Durchführung nach einem der Ansprüche 1 bis 6,
**dadurch gekennzeichnet, dass**
die Durchführung einen Grundkörper umfasst und der Grundkörper von der Öffnung des Gehäuses aufgenommen wird und zwischen dem Grundkörper und dem Leiter ein Glas- oder Glaskeramikmaterial eingebracht ist.

8. Durchführung nach einem der Ansprüche 1 bis 7,
**dadurch gekennzeichnet, dass**
das Glas- oder Glaskeramikmaterial bevorzugt eine Verschmelztemperatur aufweist, die geringer als die Schmelztemperatur des Grundkörpers (9) und/oder des Leiters und/oder des Materials des Gehäuses, insbesondere des Stiftes (11) ist.

9. Durchführung nach einem der Ansprüche 1 bis 8,
**dadurch gekennzeichnet, dass**
das Glas- oder Glaskeramikmaterial nachfolgende Komponenten in mol-% umfasst:
| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-%, ganz bevorzugt PbO 0 mol-% |
| Li₂O | 0-45 mol-%, insbesondere 0-20 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-%. |

10. Durchführung nach einem der Ansprüche 7 bis 9,
**dadurch gekennzeichnet, dass**
das Gehäuseteil eine Außen- und eine Innenseite aufweist und der Grundkörper mit der Innen- und/oder der Außenseite des Gehäuseteils verbunden ist, insbesondere in Form einer Schweißverbindung oder einer Lötverbindung oder durch Einpressen.

11. Durchführung nach einem der Ansprüche 1 bis 10,
**dadurch gekennzeichnet, dass**
das Gehäuseteil einen Deckel eines Gehäuses, bevorzugt eines Batteriegehäuses umfasst und der Deckel eine Außen- und eine Innenseite aufweist und der weitere Bereich des zweiten Abschnittes im Wesentlichen horizontal und parallel zur Innenseite des Deckels des Gehäuses, bevorzugt Batteriegehäuses, verläuft und senkrecht auf dem ersten Abschnitt steht, wobei der zweite Abschnitt eine Abschnittaußenseite und eine Abschnittinnenseite umfasst und der Abstand (H) der Abschnittinnenseite zur Innenseite des Batteriegehäuses im Bereich 0,7 . ID bis 1,5 · ID liegt, wobei ID der Durchmesser des ersten, im Wesentlichen kreisrunden Querschnittes ist oder im Bereich 3 mm bis 5 mm, insbesondere 3,5 mm bis 4,5 mm liegt.

12. Gehäuse, insbesondere für eine Batteriezelle (1000) umfassend wenigstens eine Durchführung nach einem der Ansprüche 1 bis 11.

13. Speichereinrichtung, insbesondere Batterie, bevorzugt Li-Ionen-Batterie, insbesondere Li-Ionen-Akkumulator, bevorzugt mit einem Batteriegehäuse, insbesondere nach Anspruch 12,
**dadurch gekennzeichnet, dass**
die Speichereinrichtung eine Durchführung nach einem der Ansprüche 1 bis 11 umfasst.

14. Verfahren zur Herstellung einer Durchführung, insbesondere nach einem der Ansprüche 1 bis 11 mit wenigstens einem Leiter, insbesondere einem im Wesentlichen stiftförmigen Leiter, umfassend folgende Schritte:
- es wird ein Leiter, insbesondere ein im Wesentlichen stiftförmiger Leiter, derart umgeformt, dass der Leiter zwei Abschnitte aufweist, einen ersten Abschnitt mit einem im Wesentlichen runden, insbesondere kreisrunden Querschnitt und einen zweiten Abschnitt mit einem nicht runden, insbesondere im Wesentlichen rechteckigen Querschnitt, wobei der Querschnitt des zweiten Abschnittes des Leiters in seiner Fläche im Wesentlichen mit der Fläche des Querschnittes des ersten Abschnittes des Leiters übereinstimmt,
- -der Leiter, insbesondere der im Wesentlichen stiftförmige Leiter wird im ersten Abschnitt in ein Glas- oder Glaskeramikmaterial eingeglast, ergebend die Durchführung für ein Gehäuseteil eines Gehäuses, insbesondere eines Batteriezellengehäuses.

15. Verfahren nach Anspruch 14,
**dadurch gekennzeichnet, dass**
der zweite Abschnitt des Leiters zwei Abknickungen aufweist und
der zweite Abschnitt des Leiters derart umgeformt wird, dass er einen Bereich umfasst, der als Anode und/oder Kathode der elektrochemischen Zelle dienen kann oder mit Aode und/oder Kathode verbindbar ist und einen weiteren Bereich, der im Wesentlichen horizontal und parallel zu einem Deckel verläuft und senkrecht zum ersten Abschnitt und/oder zum Bereich ist, der als Anode und/oder Kathode der elektrochemischen Zelle dienen kann oder mit Anode und/oder Kathode verbindbar ist.

16. Verfahren zum Versehen einer Batteriezelle (1000) mit einer Durchführung, insbesondere nach einem der Ansprüche 1 bis 11, umfassend folgende Schritte:
- es wird eine Durchführung zur Verfügung gestellt,
- ein Leiter wird umgeformt, derart, dass der Leiter zwei Abschnitte, einen ersten Abschnitt mit einem im Wesentlichen runden, insbesondere kreisrunden Querschnitt und einem zweiten Abschnitt mit einem im Wesentlichen nicht runden, insbesondere eckigen Querschnitt umfasst, wobei der Querschnitt des zweiten Abschnittes des Leiters in seiner Fläche im Wesentlichen mit der Fläche des Querschnittes des ersten Abschnittes des Leiters übereinstimmt,
- der Leiter, insbesondere ein im Wesentlichen stiftförmiger Leiter, wird in ein Glas- oder Glaskeramikmaterial in einen Grundkörper eingeglast,
- der Grundkörper mit dem eingeglasten, im Wesentlichen stiftförmigen Leiter wird mit dem Gehäuse verbunden, insbesondere durch Schweißen, bevorzugt Laserstrahlschweißen, Elektronenstrahlschweißen, Ultraschallschweißen, Widerstandsschweißen sowie alternativ durch Löten, Einschrumpfen, Einpressen, Einbördeln.

## Claims

1. Feedthrough, comprising at least one conductor with a cross-section (ID) in a glass or glass-ceramic material (7280) for insertion into an opening (9007.1, 9007.2, 10007.1, 10007.2) formed in a housing part of a housing,
**characterized in that**
the conductor (7003.1, 7003.2, 7003.2, 9003.1, 9003.2, 10003.1, 10003.2) has at least two sections, a first section (9005.1, 9005.2, 10005.1, 10005.2) having a first, substantially round, in particular circular cross-section with a diameter ID, wherein the first section (9005.1, 9005.2, 10005.1, 10005.2) of the conductor in the feedthrough is glazed into a glass or glass-ceramic material (7280), and a second section (9009.1, 9009.2, 10009.1, 1009.2) having a second, non-round, in particular a substantially rectangular cross-section (9100), wherein the conductor is integral with the first and second sections, wherein
the substantially rectangular cross-section of the second section of the conductor substantially corresponds with respect to its area to the area of the substantially round cross-section of the first section of the conductor.

2. Feedthrough according to claim 1, **characterized in that**
the housing part of the housing comprises a metal, in particular a light metal, preferably aluminum, an aluminum alloy, AlSiC, magnesium, a magnesium alloy, titanium, a titanium alloy, steel, stainless steel or high-grade steel.

3. Feedthrough according to claim 1 or 2, **characterized in that**
the second section (9009.1, 9009.2, 10009.1, 10009.2) comprises at least two bends (7200, 7300) and/or the second section comprises a region (9022.1, 9022.2, 10022.1, 10022.2) which can be connected to the anode and/or cathode.

4. Feedthrough according to one of claims 1 to 3, **characterized in that**
the second section (9009.1, 9009.2, 10009.1, 10009.2) comprises a further region (9020.1, 9020.2, 10020.1, 10020.2) which extends substantially horizontally and parallel to a cover and is perpendicular to the first section and/or the region which can be connected to the anode and/or cathode.

5. Feedthrough according to one of claims 1 to 4, **characterized in that**
the second section comprises a stiffened portion, in particular a U-profile, preferably in the further region (9020.1, 9020.2, 10020.1, 10020.2).

6. Feedthrough according to one of claims 1 to 5, **characterized in that**
the conductor comprises as material in particular a metal, preferably copper, CuSiC, a copper alloy, aluminum, AlSiC, or an aluminum alloy, magnesium or a magnesium alloy, NiFe, a NiFe sheath with a copper inner part, silver, a silver alloy, gold, a gold alloy and a cobalt-iron alloy and/or the conductor, in particular the pin-shaped conductor is inserted in the region of the opening (9007.1, 9007.2, 10007.1, 10007.2) into a glass or glass-ceramic material.

7. Feedthrough according to one of claims 1 to 6, **characterized in that**
the feedthrough comprises a main body and the main body is accommodated by the opening of the housing and a glass or glass-ceramic material is introduced between the main body and the conductor.

8. Feedthrough according to one of claims 1 to 7, **characterized in that**
the glass or glass-ceramic material preferably has a melting temperature which is lower than the melting temperature of the main body (9) and/or the conductor and/or the material of the housing, in particular the pin (11).

9. Feedthrough according to one of claims 1 to 8, **characterized in that**
the glass or glass-ceramic material comprises the following components in mol-%:
| | |
|---|---|
| P₂O₅ | 35-50 mol-%, in particular 39-48 mol-% |
| Al₂O₃ | 0-14 mol-%, in particular 2-12 mol-% |
| B₂O₃ | 2-10 mol-%, in particular 4-8 mol-% |
| Na₂O | 0-30 mol-%, in particular 0-20 mol-% |
| M₂O | 0-20 mol-%, in particular 12-20 mol-%, wherein it is possible that M=K, Cs, Rb |
| PbO | 0-10 mol-%, in particular 0-9 mol-%, most preferably PbO 0 mol-% |
| Li₂O | 0-45 mol-%, in particular 0-20 mol-%, preferably 17-40 mol-% |
| BaO | 0-20 mol-%, in particular 0-20 mol-%, preferably 5-20 mol-% |
| Bi₂O₃ | 0-10 mol-%, in particular 1-5 mol-%, preferably 2-5 mol-%. |

10. Feedthrough according to one of claims 7 to 9, **characterized in that** the housing part has an outer and an inner side and the main body is connected to the inner and/or the outer side of the housing part, in particular in the form of a welded joint or soldered joint or by press-fitting.

11. Feedthrough according to one of claims 1 to 10, **characterized in that** the housing part comprises a cover of a housing, preferably a battery housing, and the cover has an outer and an inner side, and the further region of the second section extends substantially horizontally and parallel to the inner side of the cover of the housing, preferably battery housing, and is perpendicular to the first section, wherein the second section comprises a section outer side and a section inner side, and the distance (H) of the section inner side to the inner side of the battery housing is in the range 0.7 • ID to 1.5 • ID, wherein ID is the diameter of the first, substantially circular cross-section or is in the range 3 mm to 5 mm, in particular 3.5 mm to 4.5 mm.

12. Housing, in particular for a battery cell (1000) comprising at least one feedthrough according to one of claims 1 to 11.

13. Storage device, in particular battery, preferably Li-ion battery, in particular Li-ion accumulator, preferably with a battery housing, in particular according to claim 12, **characterized in that** the storage device comprises a feedthrough according to one of claims 1 to 11.

14. Method for producing a feedthrough, in particular according to one of claims 1 to 11, having at least one conductor, in particular a substantially pin-shaped conductor, comprising the following steps:
- a conductor, in particular a substantially pin-shaped conductor, is formed in such a way that the conductor has two sections, a first section with a substantially round, in particular circular, cross-section and a second section with a non-round, in particular substantially rectangular, cross-section, wherein the cross-section of the second section of the conductor substantially corresponds in its area with the area of the cross-section of the first section of the conductor,
- the conductor, in particular the substantially pin-shaped conductor, is glazed in the first section into a glass or glass-ceramic material, resulting in the feedthrough for a housing part of a housing, in particular a battery cell housing.

15. Method according to claim 14, **characterized in that** the second section of the conductor has two bends and the second section of the conductor is formed in such a way that it comprises a region which can serve as anode and/or cathode of the electrochemical cell or can be connected to anode and/or cathode and a further region which extends substantially horizontally and parallel to a cover and is perpendicular to the first section and/or to the region which can serve as anode and/or cathode of the electrochemical cell or can be connected to anode and/or cathode.

16. Method for providing a battery cell (1000) with a feedthrough, in particular according to one of claims 1 to 11, comprising the following steps:
- a lead-through is provided,
- a conductor is formed in such a way that the conductor comprises two sections, a first section with a substantially round, in particular circular, cross-section and a second section with a substantially non-round, in particular angular, cross-section, wherein the cross-section of the second section of the conductor substantially corresponds in its area to the area of the cross-section of the first section of the conductor,
- the conductor, in particular a substantially pin-shaped conductor, is glazed into a glass or glass-ceramic material in a main body,
- the main body with the glazed-in, substantially pin-shaped conductor is connected to the housing, in particular by welding, preferably laser beam welding, electron beam welding, ultrasonic welding, resistance welding and alternatively by soldering, shrinking, press-fitting, flanging.

## Revendications

1. Traversée comprenant au moins un conducteur ayant une section (ID) dans un matériau à base de verre ou de vitrocéramique (7280) à insérer dans une ouverture (9007.1, 9007.2, 10007.1, 10007.2) formée dans une partie de coffre d'un coffre, **caractérisée en ce que** le conducteur (7003.1, 7003.2, 7003.2, 9003.1, 9003.2, 10003.1, 10003.2) présente au moins deux segments, un premier segment (9005.1, 9005.2, 10005.1, 10005.2) ayant une première section sensiblement ronde, en particulier circulaire, de diamètre ID, lequel premier segment (9005.1, 9005.2, 10005.1, 10005.2) du conducteur est vitrifié dans la traversée dans un matériau à base de verre ou de vitrocéramique (7280), et un deuxième segment (9009.1, 9009.2, 10009.1, 1009.2) ayant une deuxième section (9100) non ronde, en particulier sensiblement rectangulaire, le conducteur étant formé d'une pièce avec le premier segment et le deuxième, l'aire de la section sensiblement rectangulaire du deuxième segment du conducteur concordant sensiblement avec l'aire de la section sensiblement ronde du premier segment du conducteur.

2. Traversée selon la revendication 1, **caractérisée en ce que** la partie de coffre du coffre comprend un métal, en particulier un métal léger, de préférence de l'aluminium, un alliage d'aluminium, de l'AlSiC, du magnésium, un alliage de magnésium, du titane, un alliage de titane, de l'acier, de l'acier inoxydable ou de l'acier fin.

3. Traversée selon la revendication 1 ou 2, **caractérisée en ce que** le deuxième segment (9009.1, 9009.2, 10009.1, 10009.2) comprend au moins deux pliures (7200, 7300) et/ou le deuxième segment comprend une zone (9022.1, 9022.2, 10022.1, 10022.2) qui peut être reliée à une anode et/ou une cathode.

4. Traversée selon l'une des revendications 1 à 3, **caractérisée en ce que** le deuxième segment (9009.1, 9009.2, 10009.1, 10009.2) comprend une région plus large (9020.1, 9020.2, 10020.1, 10020.2) qui court sensiblement à l'horizontale et parallèlement à un couvercle et qui est perpendiculaire au premier segment et/ou à la zone qui peut être reliée à une anode et/ou à une cathode.

5. Traversée selon l'une des revendications 1 à 4, **caractérisée en ce que** le deuxième segment comprend un raidisseur, en particulier un profilé en U, en particulier dans la région plus large (9020.1, 9020.2, 10020.1, 10020.2).

6. Traversée selon l'une des revendications 1 à 5, **caractérisée en ce que** le conducteur comprend en particulier un métal comme matériau, de préférence du cuivre, du CuSiC, un alliage de cuivre de l'aluminium, de l'AlSiC ou un alliage d'aluminium, du magnésium ou un alliage de magnésium, du NiFe, une enveloppe en NiFe avec une partie intérieure en cuivre, de l'argent, un alliage d'argent, de l'or, un alliage d'or, ainsi qu'un alliage de cobalt et de fer, et/ou le conducteur, en particulier le conducteur en forme de broche, est introduit au niveau de l'ouverture (9007.1, 9007.2, 10007.1, 10007.2) dans un matériau à base de verre ou de vitrocéramique.

7. Traversée selon l'une des revendications 1 à 6, **caractérisée en ce qu'**elle comprend un corps de base et le corps de base est reçu par l'ouverture du coffre et un matériau à base de verre ou de vitrocéramique est introduit entre le corps de base et le conducteur.

8. Traversée selon l'une des revendications 1 à 7, **caractérisée en ce que** le matériau à base de verre ou de vitrocéramique présente de préférence une température de fusion inférieure à celle du corps de base (9) et/ou du conducteur et/ou du matériau du coffre, en particulier de la broche (11).

9. Traversée selon l'une des revendications 1 à 8, **caractérisée en ce que** le matériau à base de verre ou de vitrocéramique contient les composants suivants en % molaires :
| | |
|---|---|
| P₂O₅ | de 35 à 50 % molaires, en particulier de 39 à 48 % molaires |
| Al₂O₃ | de 0 à 14 % molaires, en particulier de 2 à 12 % molaires |
| B₂O₃ | de 2 à 10 % molaires, en particulier de 4 à 8 % molaires |
| Na₂O | de 0 à 30 % molaires, en particulier de 0 à 20 % molaires |
| M₂O | de 0 à 20 % molaires, en particulier de 12 à 20 % molaires, où M peut être = K, Cs, Rb |
| PbO | de 0 à 10 % molaires, en particulier de 0 à 9 % molaires, de préférence 0 % molaires de PbO |
| Li₂O | de 0 à 45 % molaires, en particulier de 0 à 20 % molaires, de préférence de 17 à 40 % molaires |
| BaO | de 0 à 20 % molaires, en particulier de 0 à 20 % molaires, de préférence de 5 à 20 % molaires |
| Bi₂O₃ | de 0 à 10 % molaires, en particulier de 1 à 5 % molaires, de préférence de 2 à 5 % molaires. |

10. Traversée selon l'une des revendications 7 à 9, **caractérisée en ce que** la partie de coffre présente une face extérieure et une face intérieure et le corps de base est relié à la face intérieure et/ou à la face extérieure de la partie de coffre, en particulier sous la forme d'une soudure ou d'une brasure ou par calage à la presse.

11. Traversée selon l'une des revendications 1 à 10, **caractérisée en ce que** la partie de coffre comprend un couvercle de coffre, de préférence de coffre de batterie, et le couvercle présente une face extérieure et une face intérieure et la région plus large du deuxième segment court sensiblement à l'horizontale et parallèlement à la face intérieure du couvercle du coffre, de préférence du coffre de batterie, et est perpendiculaire au premier segment, le deuxième segment comportant une face extérieure de segment et une face intérieure de segment et la distance (H) entre la face intérieure du segment et la face intérieure du coffre de batterie étant comprise entre 0,7 · ID et 1,5 · ID, où ID est le diamètre de la première section sensiblement circulaire ou est compris entre 3 mm et 5 mm, en particulier entre 3,5 mm et 4,5 mm.

12. Coffre, en particulier pour une cellule de batterie (1000) comprenant au moins une traversée selon l'une des revendications 1 à 11.

13. Installation d'accumulation, en particulier batterie, de préférence batterie à ions lithium, en particulier accumulateur à ions lithium, de préférence avec un coffre de batterie, en particulier selon la revendication 12, **caractérisée en ce qu'**elle comprend une traversée selon l'une des revendications 1 à 11.

14. Procédé pour la fabrication d'une traversée, en particulier selon l'une des revendications 1 à 11, avec au moins un conducteur, en particulier un conducteur sensiblement en forme de broche, comprenant les étapes suivantes :
- un conducteur, en particulier un conducteur sensiblement en forme de broche, est mis en forme de façon à comprendre deux segments, un premier segment de section sensiblement ronde, en particulier circulaire, et un deuxième segment de section non ronde, en particulier sensiblement rectangulaire, l'aire de la section du deuxième segment du conducteur correspondant sensiblement à l'aire de la section du premier segment du conducteur,
- le conducteur, en particulier le conducteur sensiblement en forme de broche, est vitrifié dans un matériau à base de verre ou de vitrocéramique dans le premier segment, ce qui donne la traversée pour une partie de coffre d'un coffre, en particulier d'un coffre pour cellule de batterie.

15. Procédé selon la revendication 14, **caractérisé en ce que**
le deuxième segment du conducteur présente deux pliures et
le deuxième segment du conducteur est mis en forme de façon à comprendre une région qui peut servir d'anode et/ou de cathode de la cellule électrochimique ou qui peut être reliée à une anode et/ou une cathode et une deuxième région qui court sensiblement à l'horizontale et parallèlement à un couvercle et est perpendiculaire au premier segment et/ou à la région qui peut servir d'anode et/ou de cathode de la cellule électrochimique ou qui peut être reliée à une anode et/ou une cathode.

16. Procédé pour équiper une cellule de batterie (1000) d'une traversée, en particulier selon l'une des revendications 1 à 11, comprenant les étapes suivantes :
- une traversée est fournie,
- un conducteur est mis en forme de façon à comprendre deux segments, un premier segment de section sensiblement ronde, en particulier circulaire, et un deuxième segment de section non ronde, en particulier sensiblement rectangulaire, l'aire de la section du deuxième segment du conducteur correspondant sensiblement à l'aire de la section du premier segment du conducteur,
- le conducteur, en particulier le conducteur sensiblement en forme de broche, est vitrifié dans un matériau à base de verre ou de vitrocéramique dans un corps de base.
- le corps de base dans lequel le conducteur sensiblement en forme de broche est vitrifié est relié au boîtier, en particulier par soudage, de préférence par soudage par laser, soudage par faisceau d'électrons, soudage par ultrasons, soudage à résistance, ou par brasage, frettage, calage à la presse, sertissage.
